(19) Europäisches Patentamt
European Patent Office
Office européen des brevets

(11) EP 4 616 710 A1

(12) **EUROPEAN PATENT APPLICATION**

(43) Date of publication:
**17.09.2025 Bulletin 2025/38**

(21) Application number: **24163380.9**

(22) Date of filing: **13.03.2024**

(51) International Patent Classification (IPC):
***A01N 57/12*** *(2006.01)* ***A01N 43/40*** *(2006.01)*
***A01P 3/00*** *(2006.01)* ***A01P 5/00*** *(2006.01)*

(52) Cooperative Patent Classification (CPC):
(C-Sets available)
**A01N 43/40; A01N 57/12; A01P 3/00; A01P 5/00**
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Bayer Aktiengesellschaft**
**51373 Leverkusen (DE)**

(72) Inventor: **The designation of the inventor has not yet been filed**

(74) Representative: **BIP Patents**
**c/o Bayer Intellectual Property GmbH**
**Alfred-Nobel-Straße 50**
**40789 Monheim am Rhein (DE)**

# (54) USE OF PHOSPHONATES FOR REDUCING THE FITNESS COSTS IN APPLE ASSOCIATED WITH HOST DEFENSE RESPONSES AGAINST INFECTIONS WITH VENTURIA INAEQUALIS

(57) The present invention relates to the use of a fungicide selected from the group of phosphonates, in particular Fosetyl-Aluminium, either alone or in combination with a fungicide selected from the group of succinate dehydrogenase inhibitors, in particular Fluopyram for reducing the fitness costs associated with infections of scab resistant and scab susceptible apple plant varieties with *Venturia inaequalis.* The invention further relates to the use of said fungicides to delay the leaf senescence process in apple.

EP 4 616 710 A1

(52) Cooperative Patent Classification (CPC): (Cont.)

C-Sets
**A01N 57/12, A01N 43/40**

## Description

### Introduction

The invention relates to the use of fungicides and/or plant defense enhancer (PDE) from the group of phosphonates, in particular Fosetyl-Aluminium, applied alone or in combination with a fungicide selected from the group of succinate dehydrogenase inhibitors (SDHI), in particular Fluopyram for reducing the fitness costs in apple, associated with plant defense reponse of Rvi- scab resistant varieties against the scab pathogen *Venturia inaequalis.*

The invention further relates to the use of said phosphonate (Fosetyl-Aluminium) alone or in combination with said SDHI to induce a delay of the natural and pathogen-induced leaf senescence process, resulting in a longer optimal vegetation and fruit development period with increased flowerbud formation, yield and higher fruit quality potential.

### Background

***Venturia inaequalis,*** a hemi-biotrophic fungus is the pathogen causing scab disease in apple plants in a wide geographic range of all apple growing areas (Bowen J, et al., 2011. Venturia inaequalis: the causal agent of apple scab. Molecular Plant Pathology 12. 105-122). *Venturia inaequalis* has gained significant attention as already a very low incidence of the disease might render fruits unmarketable therefore having an important economic impact. Mosaic apple scab (diffuse abaxial scab) is a specific form of scab, caused by identical *Venturia inaequalis* strains. Symptoms of mosaic scab develop in pronounced delay to classical scab in the form of small diffuse light or dark gray sporulating lesions on the abaxial leaf surface only. First symptoms of mosaic scab appear from the beginning of June onwards, starting on aged cluster leaves followed by the appearance on the basal extension shoot leaves and afterwards spreading exponentially to all leaves along extension shoots towards the apex, along with the leaf aging process and the progressive loss of ontogenic resistance over time (Svara A., et al., 2024. Ontogeny-dependent development of diffuse abaxial scab symptoms on apple leaves. Phytopathology submitted in February 2024).

**Rvi selections and Rvi varieties** of apples are resistant against one or several *V. inaequalis-species*. Rvi selections and varieties are based on the single presence or on the incorporation of dual or multiple genes (pyramiding) related to vertical resistance genes (e.g. Avr-Rvi6, formerly Vf) or on the combined introgression of vertical R genes such as Vf, Vm, together with partial polygenic resistance based on Quantitative Trait Loci, offering partial horizontal resistance in addition.

The challenge for scab resistant varieties however is to avoid rapid resistance breakdown and even loss of the resistance trait, once these varieties will be planted on a broader scale in commercial Integrated Pest Management orchards and getting exposed to natural outselection in main apple production regions. The combination of Rvi-resistant varieties and plant defense enhancing compounds offers a solution to prevent such an outselection and thereby contributes to a sustainable control strategy against scab.

**Leaf quality** plays an essential role for several aspects of fruit production: fruit setting, mineral sink attraction, yield, fruit quality (coloration, firmness, size) and flowerbud quality for the next season. Leaf quality status depends on several parameters. It is at first influenced by an internal energy trade-off between on one hand growth, influenced by photosynthesis, phytohormones activity, stomatal conductance, and water potential and on the other hand the defense responses, constitutively present or triggered when pathogen or pests do invade the plant. It secondly depends on the physiological status of the leaf, influenced by leaf aging and by the on /off - switch of ontogenic resistance. In addition, leaf quality depends on the exposure to abiotic stresses such as sunburst, drought or phytotoxicity induction of PPC, either leaf fertilizers, which may express through anthocyane discoloration, pronounced leaf encurling or distortion, stomata browning at the leaf underside or by the occurrence of additional necrotic or chlorotic spots induced by Phytotoxicity.

**Fitness costs,** related to resistance of plants to biotic and to environmental stresses are caused most likely by the allocation of defensive metabolites that are involved in the resistance process and may constrain other physiological processes and have a negative impact on plant traits such as biomass and seed production (Lozano-Duran R. et al., 2015; Trade-off between growth and immunity: role of brassinosteroids. Trends of Plant Sci 2015 Jan;20(1):12-9. doi: 10.1016/j.tplants.2014.09.003). Fitness costs reflect the infected plants' dilemma either to use metabolic resources such as chlorophyll accumulation, membrane stability, auxins activity for expansion and growth, or on the other hand for primary and secondary defense responses or intrinsic resistance-mechanisms in scab resistant Rvi varieties. All these defense responses ultimately lead to a decline in plant healthiness and to accelerated leaf aging. Scab resistant commercial varieties or elite breeding varieties Rvi6 under *V. inaequalis* infection pressure indeed act immediately with pinpoints (killed pathogen through a Hypersensitivity Response (HR) reaction induced by the formation of ROS (Reactive Oxygen Species), expressed by miniscule scattered necrotic rings, either by massive diffuse chlorosis or by stellate necrosis and necrotic flecking as a consequence of deployment of defense responses. The Rvi-scab resistance response is based on early recognition of the pathogen and consequential deployment of defenses based on pathogenesis-related proteins and on fungitoxic phytoalexins, but this resistance induction is limited over time and may decline at the loss of ontogenic

(aged based) resistance.

**Leaf aging and senescence** evolves for each individual leaf along the season and culminates in autumn. Individual leaf age evolves from "young" just unfurling leaves to "mature", fully expanded leaves with active ontogenic resistance to pathogens and finally to "aged" leaves, when the ontogenic resistance is lost again. Later in autumn, leaf senescence goes along with discoloration and necrosis, ultimately increased by the potential proliferation of saprophytic fungi bacteria and yeasts, quickly leading to accelerated leaf fall.

**Defense Priming** is a state of enhanced defense readiness which can be well induced by PDEs, suitable for controlling a broad spectrum of pathogens (Martinez-Medina A.et al. 2016. Recognizing plant defense priming. Trends in Plant Science, October2016, Vol 21 no. 10). Primed plants are brought in a status of "readiness for the battle" in contrast to naive plants (Conrath U.et al., 2006 Plant Microbe Interact. 19 1062-1071). Defense priming particularly offers long lasting disease control, even on newly developed leaves (Latorse, M-P. et al., 2012 Comparison of the transcriptomic biomarker signatures in vine and Arabidopsis thaliana attacked by Downy mildews with or without Fosetyl-Al, stimulator of plant defenses pre-treatment. Natural products and Biocontrol Perpignan: 19-21).

**Plant Defense Enhancement** may be induced either by pathogens themselves during the invading process by fragmented cuticula or plant cell wall particles or by synthetic molecules such as Fosetyl-Al, which brings the cells in a primed state of enhanced defense. PDEs like Fosetyl-Al induce pronouced signaling cascades leading to the formation of defence proteins, PRs (pathogen-related proteins) such as glucanases, chitinases, able to fill the gaps in the cell wall, made by the pathogen and to defense products such as phytoallexins with direct fungitoxic effects. Such overall processes impact all cells of a plant and are collectively termed "defense priming" [Martinez-Medina, A. et al. 2016].

**Fosetyl-Aluminium (Fosetyl-Al, FEA)** is classified as a phoshonate. Phosphonates are known to be fungicidally active by a direct effect on the inhibition of mycelium growth through competion of phosphate assimilation with a particular effect against oomycetes like *Phytophthora, Plasmopara, Pythium.* Their efficacy is increased by an indirect effect of enhancing natural plant defences via release of ethylphosphonate inside the plant tissue, triggereing salicylic acid, jasmonic acid and ethylene pathways. The PDE effect of Fosetyl-Al intensifies the plant's immune response against a broad number of ascomycetes, including *V. inaequalis* (Penn State, College of Agricultural Science, Center for Turfgrass Sciencehttp://plantscience.psu.edu/research/centers/turf/extension/factsheets/phosphonate-products and Petré, R.et al., 2015, Acta Hort. (ISHS) 1094:431-438)

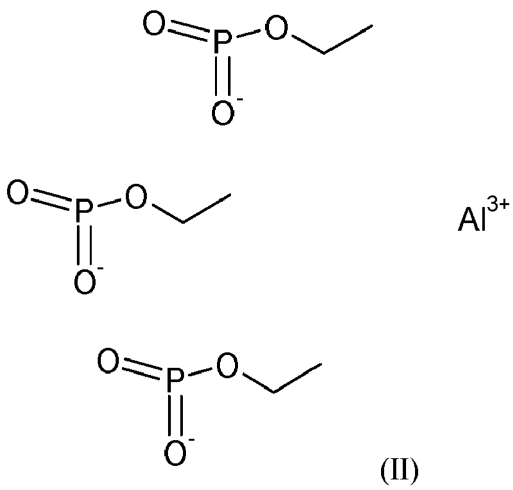

(II)

Fosetyl-Al, also known as Aluminiumethylhydrogenphosphonate (CAS-No 39148-24-8), refers to a compound of the formula (II).

Fosetyl-Al has been described in DE2456627 as a systemic and curative fungicide with high activity against Oomycetes. Fosetyl-Al has recently been registered as a plant defense inducer/defencer in several plants (Petré, R.et al., 2015, Acta Hort. (ISHS) 1094:431-438), De Maeyer L.et al., 2021. Fluopyram & Fosetyl-Al (Luna® Care - 10978 P/B): claim for an additional mode of action as an elicitor, inducing Plant Defence enhancement in plants).

Induction of PDE mechanisms by Fosetyl-Al is a long-lasting effect resulting from the stable accumulation of phosphonates mainly in the growing tissue for six weeks after treatment.

**Succinate dehydrogenase inhibitors** (SDHI) are active ingredients which inhibit fungal succinate dehydrogenase, a crucial enzyme of the respiration chain. There are different classes of SDHI, several commercial products sold as fungicides contain SDHIs.

Fluopyram refers to a compound of the formula (I)

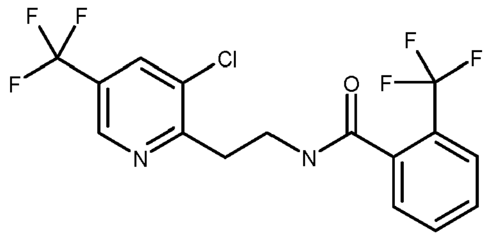

(I),

also known as *N*-{2-[3-chloro-5-(trifluoromethyl)-2-pyridyl]ethyl}-α,α,α-trifluoro-ortho-toluamide or *N*-[2-[3-chloro-5-(trifluoromethyl)-2-pyridinyl]ethyl]-2-(trifluoromethyl)benzamide. Fluopyram is widely known as a fungicide, belonging to the group of succinate dehydrogenase (SDH) inhibitors. WO 2004/016088 discloses the efficacy of Fluopyram against different phytopathogenic fungi.

Fungicidal compositions comprising Fosetyl-Al and Fluopyram are described in EP1713334, whereas EP3726989 discloses the efficacy of fungicidal compositions comprising Fluopyram and Fosetyl-Al against Mosaic scab in apples. However, it is not apparent from the teaching of the prior art that fungicidal compositions comprising phosphonates like Fosetyl- Al alone or in combination with SDHIs like Fluopyram can be used to (I) reduce the fitness costs in apple, associated with the plants' defense responses against infections with *V. inaequalis,* and to (II) delay leaf aging and senescence.

## Invention

It has now been found that treatment with fungicide/ PDE compounds from the group of phosphonates, in particular Fosetyl-Aluminium, alone or in combination with a fungicide selected from the group of succinate dehydrogenase inhibitors, in particular Fluopyram, significantly reduces the fitness costs, in apple associated with their defense response against infections with *Venturia inaequalis.*

In addition, the treatments according to the invention have been found to result in a significant delay of leaf aging and senescence, an effectobserverd for Rvi-scab resistant as well as scab sensitive apple varieties.

The extent of the effects achieved by the inventive treatments, i.e. reduction of fitness costsand delay of leaf aging and senescence in apple is maximized when the treatments areapplied during the postflowering period, starting from BBCH 69 (petal fall) onwards, when the leaf mass per area reaches its maximumand when the growth flux of the extension shoots guarantees a maximal acropetal and basipetal systemicity of FEA. Over time, the effects of Fosetyl-Al are increasingly replaced by the defense priming induced in the plants..

This defense priming provides longlasting scab and mosaic scab (diffuse abaxial scab) control.

## Definitions

In the context of the present invention, **"reduction of fitness costs"** means a significant reduction in the incidence and in the severity of leaf chlorosis and pinpoints symptoms, occurring after infection of apple with *V. inaequalis* scab fungus in the course of the plant's defense reactions. This reduction of fitness costs has a positive impact on the overall plant fitness and leaf health status. Figure 1 illustrates the reduction of chlorosis both for susceptible apple varieties as for apple varieties with various scab resistance profiles.

In the context of the present **invention," delay of leaf senescence"** refers to a delayed onset of leaf aging and leaf senescence, apparent from the proportion of full green leaves on the trees' canopy and by the speed of leaf fall in autumn. The fall of leaves was evaluated on 7th and 18th of November counting the number of green leaves in each tree and illustrated in Figure 2.

Trees treated with Fosetyl-Alalone or in combination with Fluopyram kept significantly more green leaves on the trees on November 7th and 18th, indicating that the treatments cause a delay in senescence.

The leaf fall speed was only significantly lower for the trees treated with Fosetyl-Al in combination with Fluopyram, the additional greening effects, well described and known after Fluopyram applications may add to the delay in senescence induced by priming effects through Fosetyl -Al.

The period for applying the compositions disclosed herein preferably starts with BBCH 69 (petal fall), whereas the compositions disclosed herein may further be applied in the phenological zone, starting after flowering BBCH 69 + 1 week, by two consecutive sprays with a 10-days interval, followed by one alternative protectant fungicide (e.g. captan, dithianon) and finally, respecting a 7 days interval, an followed by an additional fungicide / PDE application at BBCH 71. So, in total three applications with the compositions disvclosed herein assure the priming for defense effects. The cited phenology description is an alternative way of describing the optimized application timepoints as the period between BBCH 69 (all petal leaves are fallen) and beginning of fruit development BBCH 71, whereas BBCH "70" does not exist. As the timepoint

where all petals have fallen can be determined quite easily, the expression "BBCH plus two weeks" provides a practical explanation regarding the timing of the application. The compositions disclosed herein are preferably applied in the postflowering stage, from BBCH 69 (according to the BBCH monograph from the "Biologische Bundesanstalt für Land- und Forstwirtschaft, Bundessortenamt und Chemische Industrie" [German Federal Biological Research Centre for Agriculture and Forestry], 2nd edition, 2001) onwards and respecting the pronounced growth flux which takes place in post flowering period, until the end of leaf fall (BBCH 97). All BBCH numbers provided refer to the BBCH definition for pome fruit.

**PDE compounds** from the group of phosphonates, in particular Fosetyl-Aluminium, either alone or in combination with a fungicide selected from the group of succinate dehydrogenase inhibitors, in particular Fluopyram are at a pivotal positioning in current IPM schedules where they do install priming for scab control at the tail part of the primary ascospore period and reach out their conidial and diffuse abaxial mosaic scab control effect over the ulterior summer part. Diffuse abaxial scab develops from a transient quiescent stage of *V. inaequalis* primary infection confronted with leaf transition towards ontogenic resistance activity, fully operational in fully expanded leaves. This quiescent infection progresses when the ontogenic resistance breaks down in aging leaves which correlated with the appearance of diffuse abaxial scab at the underside of affected leaves. Application of said PDE, alone or in combination with said fungicide assures priming of newly developed leaves and supports the control of secondary conidial and mosaic scab (diffuse abaxial scab), occurring in summer. At the described positioning all plants and plant parts can be treated in accordance with the invention.

**Plants** are understood here to mean all plants and plant populations, such as desired and undesired wild plants or crop plants (including naturally occurring crop plants). Crop plants may be plants which can be obtained by conventional breeding and optimization methods or by biotechnological and genetic engineering methods or combinations of these methods, including the transgenic plants and including the plant varieties which are protectable and non-protectable by plant breeders' rights.

The term **"apple"** is understood to be any plant or plant part of the genus *Malus,* in particular the cultivated *Malus pumila* or *Malus domesticus.* The definition includes any cultivar of *Malus,* eg cooking apples, cider apples but also those cultivars for direct consumption like Ambrosia, Fuji, Gala, Golden Delicious, Granny Smith, Honeycrisp, Jonagold, McIntosh, Pink Lady, Red Delicious, or wild *Malus* species like *Malus sieversii* or *Malus sylvestris* (crabapple). The term "apple" does not only refer to the fruit, but also to the whole deciduous tree or any part of it, in particular leaves and shoots.

**"Rvi-scab resistance"** apple selections or varieties contain either the Rvi6 resistance gene (coming from *Malus floribunda)* against scab *V. inaequalis,* or other genes providing partial resistance against apple scab. Pyramiding of monogenic R 's (resistance factors) or accumulation of monogenic R- genes with additional polygenic horizontal resistance traits is a major objective in international breeding. Further progress in the making of Rvi resistant selections could come from biotechnology once resistance genes are identified. These genes could be cloned and replace, by positional cloning, alleles of ineffective genes, envisaging a gene therapy of cultivars defective in resistance. The invention now includes as well scab sensitive varieties such as ' Golden Delicious' and a Better3fruit (International Breeding Institute based in Belgium) variety 'Sensitive-7' as partial resistant varieties such as 'Pinova' together with the Better3fruit varieties 'PartialRes-4' and 'PartialRes-5' as partial resistant varieties, and vertical resistant varieties such as Better3fruit varieties 'Rvi6-1', 'Rvi6-2' and pyramided resistant selections such as 'Rvi6+-3' which contains in addition to the Rvi6 resistance gene another resistance gene that contributes partial resistance against apple scab.

The term **"plant parts"** is to be understood as meaning all above-ground and below-ground parts and organs of plants, such as shoot, leaf, flower and root, by way of example ears, leaves, needles, stalks, stems, trunks, flowers, fruit bodies, fruits, seed (including seeds of transgenic plants), seedlings, rootstocks, grafts and cuttings, and also roots and rhizomes. The plant parts also include harvested material and also vegetative and generative propagation material, for example rootstocks, cuttings, grafts, rhizomes, slips and seedlings. Leaves may be rosette leaves, extension shoot leaves or spur - and brindil leaves.

Succinate dehydrogenase inhibitors **(SDHI)** are active ingredients which inhibit fungal succinate dehydrogenase, a crucial enzyme of the respiration chain.

In one embodiment the SDHIs are selected from the group comprising of benzovindiflupyr (1072957-71-1), bixafen (581809-46-3), boscalid (188425-85-6), fluindapyr (1383809-87-7), Fluopyram (658066-35-4), (2.8) fluxapyroxad (907204-31-3), isofetamid (875915-78-9), isoflucypram (1255734-28-1), isopyrazam (mixture of syn-epimeric racemate 1RS,4SR,9RS and anti-epimeric racemate 1RS,4SR,9SR) (881685-58-1), isopyrazam (anti-epimeric racemate 1RS,4SR,9SR), isopyrazam (anti-epimeric enantiomer 1R,4S,9S), isopyrazam (anti-epimeric enantiomer 1S,4R,9R), isopyrazam (syn epimeric racemate 1RS,4SR,9RS), isopyrazam (syn-epimeric enantiomer 1R,4S,9R), isopyrazam (syn-epimeric enantiomer 1S,4R,9S), penthiopyrad (183675-82-3), pydiflumetofen (1228284-64-7). Chemical Abstract Service (CAS) Numbers are provided in brackets.

In one embodiment the SDHIs are selected from the group consisting of benzovindiflupyr (1072957-71-1), bixafen (581809-46-3), boscalid (188425-85-6), fluindapyr (1383809-87-7), Fluopyram (658066-35-4), (2.8) fluxapyroxad (907204-31-3), isofetamid (875915-78-9), isoflucypram (1255734-28-1), isopyrazam (mixture of syn-epimeric racemate 1RS,4SR,9RS and anti-epimeric racemate 1RS,4SR,9SR) (881685-58-1), isopyrazam (anti-epimeric racemate

1RS,4SR,9SR), isopyrazam (anti-epimeric enantiomer 1R,4S,9S), isopyrazam (anti-epimeric enantiomer 1S,4R,9R), isopyrazam (syn epimeric racemate 1RS,4SR,9RS), isopyrazam (syn-epimeric enantiomer 1R,4S,9R), isopyrazam (syn-epimeric enantiomer 1S,4R,9S), penthiopyrad (183675-82-3), pydiflumetofen (1228284-64-7).

In one embodiment the SDHIs are selected from the group consisting of benzovindiflupyr (1072957-71-1), bixafen (581809-46-3), boscalid (188425-85-6), Fluopyram (658066-35-4), (2.8) fluxapyroxad (907204-31-3), isoflucypram (1255734-28-1), penthiopyrad (183675-82-3), pydiflumetofen (1228284-64-7).

In one embodiment **Fluopyram** is preferred.

**Phosphonates** are selected from the group comprising of potassium phosphite, monobasic sodium phosphite, dibasic sodium phosphite, ammonium phosphite, Aluminium ethyl hydrogen phosphonate, sodium ethyl hydrogen phosphonate, calcium ethyl hydrogen phosphonate.

In one embodiment phosphonates are selected from the group consisting of potassium phosphite, monobasic sodium phosphite, dibasic sodium phosphite, ammonium phosphite, Aluminium ethyl hydrogen phosphonates.

In one embodiment phosphonates are selected from the group consisting of potassium phosphite, monobasic sodium phosphite, dibasic sodium phosphite, ammonium phosphite and mixtures thereof.

In one embodiment phosphonates are selected from the group consisting of Aluminium ethyl hydrogen phosphonates, also known as **Fosetyl-Aluminium.**

## Detailed Description

The use of compositions comprising a PDE compound from the group of phosphonates, in particular Fosetyl-Aluminium alone or in combination with a fungicide selected from the group of succinate dehydrogenase inhibitors, in particular Fluopyram, significantly reduces the leaf fitness costs in apple associated with their defense reponse against infections with *Venturia inaequalis.*

The use of compositions comprising a PDE compound from the group of phosphonates, in particular Fosetyl-Aluminium alone or in combination with a fungicide selected from the group of succinate dehydrogenase inhibitors, in particular Fluopyram, further results in a significant delay of leaf aging and senescence.

In one embodiment, a composition comprising a plant defense enhancer from the group of phosphonates is used for reducing the fitness costs in apple plants associated with the defense response of the apple plants against infections with *Venturia inaequalis.*

In a further embodiment, a composition comprising the plant defense enhancer Fosetyl-Aluminium is used for reducing the fitness costs in apple plants associated with the defense response of the plants against infections with *Venturia inaequalis.*

In a further embodiment, a composition comprising a plant defense enhancer from the group of phosphonates is used in combination with a composition comprising a fungicide selected from the group of succinate dehydrogenase inhibitors for reducing the fitness costs in apple plants associated with the defense response of the plants against infections with *Venturia inaequalis.*

In a further embodiment, a composition comprising the plant defense enhancer Fosetyl-Aluminium is used in combination with a composition comprising a fungicide selected from the group of succinate dehydrogenase inhibitors for reducing the fitness costs in apple plants associated with the defense response of the plants against infections with *Venturia inaequalis.*

In a further embodiment, a composition comprising a plant defense enhancer from the group of phosphonates is used in combination with a composition comprising the succinate dehydrogenase inhibitor Fluopyram for reducing the fitness costs in apple plants associated with the defense response of the plants against infections with *Venturia inaequalis.*

In a further embodiment, a composition comprising the plant defense enhancer Fosetyl-Aluminium is used in combination with a composition comprising the succinate dehydrogenase inhibitor Fluopyram for reducing the fitness costs in apple plants associated with the defense response of the plants against infections with *Venturia inaequalis.*

In a further embodiment, a composition comprising a plant defense enhancer from the group of phosphonates and a fungicide selected from the group of succinate dehydrogenase inhibitors is used for reducing the fitness costs in apple plants associated with the defense response of the plants against infections with *Venturia inaequalis.*

In a further embodiment, a composition comprising the plant defense enhancer Fosetyl-Aluminium and a fungicide selected from the group of succinate dehydrogenase inhibitors is used for reducing the fitness costs in apple plants associated with the defense response of the plants against infections with *Venturia inaequalis.*

In a further embodiment, a composition comprising the plant defense enhancer Fosetyl-Aluminium and the succinate dehydrogenase inhibitor Fluopyram is used for reducing the fitness costs in apple plants associated with the defense response of the plants against infections with *Venturia inaequalis.*

In a further embodiment of the invention, one of the aforementioned compositions or combinations thereof ares applied between BBCH 69 and BBCH 71.

In a further embodiment of the invention, the aforementioned composition is applied at BBCH 71.

In a further embodiment of the invention, the aforementioned composition is applied at BBCH 69 plus two weeks.

In a further embodiment of the invention, the aforementioned composition is applied by spraying.

In a further embodiment of the invention, the aforementioned composition is applied at an application rate between 0.1 and 1.5 kg/ha/mCH of total active ingredient.

In a further embodiment of the invention, the aforementioned composition is used for reducing the fitness costs in apple plants associated with the defense response of the apple plants against infections with *Venturia inaequalis,* wherein said use results in a delay of leaf senescence in the treated apple plants.

In a further embodiment, compositions comprising a PDE compound from the group of phosphonates, in particular Fosetyl-Aluminium alone or in combination with a fungicide selected from the group of succinate dehydrogenase inhibitors, in particular Fluopyram are applied during the postflowering period starting at BBCH 69 plus two weeks and ending at BBCH 71, resulting in a significant reduction of the impairment of leaf fitness and a significant delay of the aging and senescence in leaves at BBCH stage between 71 and 97.

Compositions comprising a PDE compound from the group of phosphonates, in particular Fosetyl-Aluminium, either alone or in coformulation with a fungicide selected from the group of succinate dehydrogenase inhibitors, in particular Fluopyram may be present in their commercially available formulations and in the use forms, prepared from these formulations, as a mixture with other active ingredients, such as insecticides, attractants, sterilants, bactericides, acaricides, nematicides, fungicides, growth regulators, herbicides, safeners, fertilizers, biological control agents, resistance enhancers or semiochemicals.

Compositions comprising Fosetyl-Aluminium and Fluopyram may be present in their commercially available formulations and in the use forms, prepared from these formulations, as a mixture with other active ingredients, such as insecticides, attractants, sterilants, bactericides, acaricides, nematicides, fungicides, growth regulators, herbicides, safeners, fertilizers, biological control agents, resistance enhacers or semiochemicals.

In addition, the described positive effect of compositions comprising Fosetyl-Aluminium and Fluopyram on the control of scab in apples with lifting of the fitness penalty and delay of senescence can be promoted by an additional treatment with insecticidal, fungicidal or bactericidal active ingredients, resistance enhancers and biological control agents.

Combinations of compositions comprising Fosetyl-Aluminium and Fluopyram with substances including insecticides, fungicides, resistance enhancers and bactericides, fertilizers, growth regulators and biological control agents, can likewise find use in the control of scab scab in apples with lifting of the fiteness penalty and delay of leaf aging senescence process.

The compositions comprising a PDE selected from the group of phosphonates, in particular Fosetyl-Aluminium alone or in coformulation with a fungicide selected from the group of succinate dehydrogenase inhibitors, in particular Fluopyram may further comprise at least one other additional component such as auxiliaries, solvents, carriers or supports, filler, surfactants or extenders, all being agriculturally acceptable.

According to the invention the term "support" or "carrier" is to be understood as meaning a natural or synthetic, organic or inorganic substance which is mixed or combined with the active compounds for better applicability, in particular for application to plants or plant parts or seeds. The support or carrier, which may be solid or liquid, is generally inert and should be suitable for use in agriculture. Suitable solid or liquid carriers / supports include for example ammonium salts and natural ground minerals, such as kaolins, clays, talc, chalk, quartz, attapulgite, montmorillonite or diatomaceous earth, and ground synthetic minerals, such as finely divided silica, alumina and natural or synthetic silicates, resins, waxes, solid fertilizers, water, alcohols, especially butanol, organic solvents, mineral oils and vegetable oils, and also derivatives thereof. It is also possible to use mixtures of such supports or carriers. Solid supports / carriers suitable for granules are for example crushed and fractionated natural minerals, such as calcite, marble, pumice, sepiolite, dolomite, and also synthetic granules of inorganic and organic meals and also granules of organic material, such as sawdust, coconut shells, maize cobs and tobacco stalks. Suitable liquefied gaseous extenders or carriers are liquids which are gaseous at ambient temperature and under atmospheric pressure, for example aerosol propellants, such as butane, propane, nitrogen and carbon dioxide. Tackifiers, such as carboxymethylcellulose and natural and synthetic polymers in the form of powders, granules and latices, such as gum arabic, polyvinyl alcohol, polyvinyl acetate, or else natural phospholipids, such as cephalins and lecithins and synthetic phospholipids can be used in the formulations. Other possible additives are mineral and vegetable oils and waxes, optionally modified. If the extender used is water, it is also possible for example, to use organic solvents as auxiliary solvents. Suitable liquid solvents are essentially: aromatic compounds, such as xylene, toluene or alkylnaphthalenes, chlorinated aromatic compounds or chlorinated aliphatic hydrocarbons, such as chlorobenzenes, chloroethylenes or methylene chloride, aliphatic hydrocarbons, such as cyclohexane or paraffins, for example mineral oil fractions, mineral and vegetable oils, alcohols, such as butanol or glycol, and also ethers and esters thereof, ketones, such as acetone, methyl ethyl ketone, methyl isobutyl ketone or cyclohexanone, strongly polar solvents, such as dimethylformamide and dimethyl sulphoxide, and also water.

In the present specification, the term "surfactant" comprises an emulsifier, a dispersing agent or a wetting agent of ionic or non-ionic type or a mixture of such surfactants. Mention may be made, for example, of polyacrylic acid salts,

lignosulphonic acid salts, phenolsulphonic or naphthalenesulphonic acid salts, polycondensates of ethylene oxide with fatty alcohols or with fatty acids or with fatty amines, substituted phenols (in particular alkylphenols or arylphenols), salts of sulphosuccinic acid esters, taurine derivatives (in particular alkyl taurates), phosphoric esters of polyoxyethylated alcohols or phenols, fatty acid esters of polyols, and derivatives of the above compounds containing sulphate, sulphonate and phosphate functions. The presence of at least one surfactant is generally essential when the active material and/or the inert support are water-insoluble and when the vector agent for the application is water. Preferably, surfactant content may be comprised between 5% and 40% by weight of the composition.

Additional components may also be included, e.g. protective colloids, adhesives, thickeners, thixotropic agents, penetration agents, stabilisers, sequestering agents. More generally, the active materials can be combined with any solid or liquid additive, which complies with the usual formulation techniques.

It is further possible to use colourants such as inorganic pigments, for example iron oxide, titanium oxide, Prussian blue, and organic dyes, such as alizarin dyes, azo dyes and metal phthalocyanine dyes, and trace nutrients, such as salts of iron, manganese, boron, copper, cobalt, molybdenum and zinc.

In general, the compositions according to the invention may contain from 0.05 to 99% (by weight) of active material, preferably 0.1 to 95% by weight, more preferably 1 to 90 % by weight, most preferably 10 to 70% by weight.

The compositions comprising a PDE selected from the group of phosphonates, in particular Fosetyl-Aluminium, alone or in coformulation with a fungicide selected from the group of succinate dehydrogenase inhibitors, in particular Fluopyram can be used in various forms such as aerosol dispenser, capsule suspension, cold fogging concentrate, dustable powder, emulsifiable concentrate, emulsion oil in water, emulsion water in oil, encapsulated granule, fine granule, flowable concentrate for seed treatment, gas (under pressure), gas generating product, granule, hot fogging concentrate, macrogranule, microgranule, oil dispersible powder, oil miscible flowable concentrate, oil miscible liquid, paste, plant rodlet, powder for dry seed treatment, seed coated with a pesticide, soluble concentrate, soluble powder, solution for seed treatment, suspension concentrate (flowable concentrate), ultra low volume (ulv) liquid, ultra low volume (ulv) suspension, water dispersible granules or tablets, water dispersible powder for slurry treatment, water soluble granules or tablets, water soluble powder for seed treatment and wettable powder.

These compositions include not only compositions which are ready to be applied to the plant or seed to be treated by means of a suitable device, such as a spraying or dusting device, but also concentrated commercial compositions which must be diluted before they are applied to the crop.

In one embodiment, the use of compositions comprising a PDE selected from the group of phosphonates, in particular Fosetyl-Aluminium alone or in combination with a fungicide selected from the group of succinate dehydrogenase inhibitors, in particular Fluopyram is described as spraying shoots, trunks, and leaves.

In one embodiment, the use of compositions comprising a PDE selected from the group of phosphonates, in particular Fosetyl-Aluminium alone or in combination with a fungicide selected from the group of succinate dehydrogenase inhibitors, in particular Fluopyramis carried out with an application rate between 0.1 and 1.5 kg/ha/mCH of total active ingredient, preferably between 0.25 and 1 kg/ha/mCH, whereas mCH stands for metre of canopy height.

In one embodiment the aforementioned application rate is between 0.15 and 2 kg/ha of total active ingredient.

In one embodiment the aforementioned application rate is 1 kg/ha/mCH of total active ingredient, in another embodiment the application rate is 0.666 kg/ha/mCH of total active ingredient.

In another embodiment the application rate for the phosphonate is 0.05 to 0.8 kg/ha/mCH and the application rate for the succinate dehydrogenase inhibitor is 0.01 to 0.5 kg/ha/mCH.

In another embodiment, the application rate for the phosphonate is 0.2 to 0.7 kg/ha/mCH and the application rate for the succinate dehydrogenase inhibitor is 0.03 to 0.4 kg/ha/mCH.

In another embodiment the phosphonate is Fosetyl-Aluminium, applied with an application rate of 0.05 to 0.8 kg/ha/mCH and the succinate dehydrogenase inhibitor is Fluopyram, applied with an application rate of 0.01 to 0.5 kg/ha/mCH.

Preferably, the application rate for Fosetyl-Aluminium is 0.2 to 0.7 kg/ha/mCH and the application rate for Fluopyram is 0.03 to 0.4 kg/ha/mCH.

In another embodiment the application rate for Fosetyl-Aluminium is 0.666 kg/ha/mCH, and the application rate for Fluopyram is 0.05 kg/ha/mCH. In another embodiment the application rate Fosetyl-Aluminium is 0.444 kg/ha/mCH, and the application rate for Fluopyram is 0.033 kg/ha/mCH.

In general, the weight ratio of the succinate dehydrogenase inhibitor to the phosphonate is from 2000 : 1 to 1 : 1000.

The weight ratio of the succinate dehydrogenase inhibitor to the phosphonate is preferably from 100 : 1 to 1 : 100; more preferably from 20 : 1 to 1 : 50. The active ingredient mixture of the succinate dehydrogenase inhibitor to the phosphonate comprises the succinate dehydrogenase inhibitor and the phosphonate as described above preferably in a mixing ratio of from 1000: 1 to 1:1000, very preferably from 50:1 to 1:50, more preferably in a ratio of from 20:1 to 1:20, even more preferably from 10:1 to 1:10, very preferably from 5:1 and 1:5, special preference being giv-en to a ratio of from 2:1 to 1:2, and a ratio of from 4:1 25 to 2:1 being likewise preferred, above all in a ratio of 1:1, or 5:1, or 5:2, or 5:3, or 5:4, or 4:1, or

4:2, or 4:3, or 3:1, or 3:2, or 2:1, or 1 :5, or 2:5, or 3:5, or 4:5, or 1:4, or 2:4, or 3:4, or 1 :3, or 2:3, or 1 :2, or 1 :600, or 1 :300, or 1:150, or 1:35, or 2:35, or 4:35, or 1 :75, or 2:75, or 4:75, or 1:6000, or 1:3000, or 1:1500, or 1:350, or 2:350, or 4:350, or 1:750, or 2:750, or 4:750. Those mixing ratios are understood to include, on the one hand, ratios by weight and also, on other hand, molar ratios.

In one embodiment, the compositions comprising Fosetyl-Aluminium and Fluopyram, are applied by dipping, spraying, atomizing, irrigating, evaporating, painting, spreading-on, watering (drenching), drip irrigating, chemigating or injecting seedlings, rootstocks, grafts and cuttings, stems, shoots, trunks, and leaves to be treated.

In order to convert kg product per hectare application to kg product per ha and metre of canopy height (m CH) the following conversion may be applied: 3 kg product per ha orchard soil corresponds to 1 kg of product per mCH or 2 kg per ha of leafwall area corresponds to 1 kg of product per mCH.

In one embodiment the compositions comprising Fosetyl-Aluminium and Fluopyram are applied up to three times per season after BBCH stage 69 (after flowering) in pomefruit.

In one embodiment the compositions comprising Fosetyl-Aluminium and Fluopyram are applied up to three times per season after BBCH stage 69 (after flowering) in apples.

In one embodiment the compositions comprising comprising Fosetyl -Aluminium and Fluopyram are applied up to three times per season after BBCH stage 69 (after flowering) in pears.

Depending on their particular physical and/or chemical properties, a fungicide selected from the group of selected from the group of phosphonates, in particular Fosetyl-Aluminium and a fungicide from the group of succinate dehydrogenase inhibitors, in particular Fluopyram can be converted in accordance with the invention to the customary formulations, such as solutions, emulsions, suspensions, powders, foams, pastes, granules, aerosols and microencapsulations in polymeric substances and in coating materials for seed, and also ULV cool and warm fogging formulations.

Depending on their particular physical and/or chemical properties, Fosetyl-Aluminium and Fluopyram can be converted in accordance with the invention to the customary formulations, such as solutions, emulsions, suspensions, powders, foams, pastes, granules, aerosols and microencapsulations in polymeric substances and in coating materials for seed, and also ULV cool and warm fogging formulations. The formulations contain generally between 0.01 and 95 per cent by weight of active ingredient, preferably between 0.05 and 90%, more preferably between 0.1 and 80 %.

These formulations are produced in a known manner, for example by mixing the active ingredients with extenders, i.e. liquid solvents, liquefied gases under pressure and/or solid carriers, optionally using surfactants, i.e. emulsifiers and/or dispersants, and/or foam formers. If the extender used is water, it is also possible to use, for example, organic solvents as auxiliary solvents. Useful liquid solvents are essentially: aromatics such as xylene, toluene or alkylnaphthalenes, chlorinated aromatics or chlorinated aliphatic hydrocarbons such as chlorobenzenes, chloroethylenes or methylene chloride, aliphatic hydrocarbons such as cyclohexane or paraffins, for example mineral oil fractions, alcohols such as butanol or glycol and their ethers and esters, ketones such as acetone, methyl ethyl ketone, methyl isobutyl ketone or cyclohexanone, strongly polar solvents such as dimethylformamide or dimethyl sulphoxide, or else water. Liquefied gaseous extenders or carriers are understood to mean those liquids which are gaseous at standard temperature and under standard pressure, for example aerosol propellants such as halohydrocarbons, or else butane, propane, nitrogen and carbon dioxide. Useful solid carriers are for example natural rock flours such as kaolins, clays, talc, chalk, quartz, attapulgite, montmorillonite or diatomaceous earth, and synthetic rock flours such as finely divided silica, alumina and silicates. Useful solid carriers for granules are for example crushed and fractionated natural rocks such as calcite, pumice, marble, sepiolite, dolomite, and synthetic granules of inorganic and organic flours, and also granules of organic material such as sawdust, coconut shells, maize cobs and tobacco stalks. Useful emulsifiers and/or foam generators are for example nonionic and anionic emulsifiers, such as polyoxyethylene fatty acid esters, polyoxyethylene fatty alcohol ethers, for example alkylaryl polyglycol ethers, alkylsulphonates, alkyl sulphates, arylsulphonates, or else protein hydrolysates. Useful dispersants include for example lignosulphite waste liquors and methylcellulose.

In the formulations it is possible to use tackifiers such as carboxymethylcellulose, natural and synthetic polymers in the form of powders, granules or latices, such as gum arabic, polyvinyl alcohol and polyvinyl acetate, or else natural phospholipids such as cephalins and lecithins and synthetic phospholipids. Further additives may be mineral and vegetable oils.

It is possible to use colorants such as inorganic pigments, for example iron oxide, titanium oxide and Prussian Blue, and organic dyes such as alizarin dyes, azo dyes and metal phthalocyanine dyes, and trace nutrients such as salts of iron, manganese, boron, copper, cobalt, molybdenum and zinc.

Owing to the particular systemic properties of Fluopyram and Fosetyl-Aluminium, the treatment of the plants, plant parts as for example leaves, stems, trunks and shoots, and plants grown from seedlings, root stocks, grafts and cuttings with Fluopyram and Fosetyl-Aluminium not only the control of Mosaic scab on the plant itself, but also on the plant parts which originate therefrom after plant growth. In this way, the immediate treatment of the crop before or at the time of transplanting, or after can be dispensed.

The following examples serve to illustrate the invention without restricting it.

**Example 1**

In this study, the proof of concept of the complementary strategy of Rvi resistant scab selections and the use of the PDE compounds Fluopyram and Fosetyl-Al has been evaluated.

Four sources of resistance were involved: two monogenetic resistance scab varieties (Vf and Vm), two varieties with a partial scab resistance (Bayer part. 5 and Bayer part. 6) and two scab sensitive varieties (Golden delicious and Bayer 7 sensitive). Altogether 8 varieties, among them susceptible and scab resistant varieties, were included in this study. Fosetyl-Al and Fluopyram were applied 3 times in the postflowering period, starting at BBCH 69 + 2 weeks and ending at BBCH 71.

For all these varieties, infection with both, classical and mosaic scab have been consistently reduced after treatment with Fosetyl-Al and Fluopyram. Also, leaf quality distortion is reduced after said treatment in most of the varieties (cfr geen bars), indicating a reduced leaf quality impairment.

**Example 2**

Leaf senescence evaluation by % leaf density on tree versus % leaf drop

The results indicate that after application of combinations comprising Fosetyl-Al and Fluopyram, the leaf density in October on the three canopy levels was generally higher compared to the untreated plants.

**Example** 3

Plant Material

To compare the efficacy of compositions comprising Fluopyram and Fosetyl-Al (as in the commercial product Luna Care®) with that of compositions comprising and Fosetyl-Al alone ( as in the commercial product Aliette®) against abaxial scab infection, in apple trees resistant to infections with *Venturia inaequalis,* a small-scale pot experiment on 2-year old trees/M9 -rootstock was set up with eight different genotypes. The genotypes were ' Golden Delicious' and 'Sensitive-7' as controls sensitive to *V. inaequalis,* 'Pinova', 'PartialRes-4' and 'PartialRes-5' as partially resistant varieties, and 'Rvi6-1', 'Rvi6-2' and 'Rvi6+-3' as resistant varieties. The variety 'Rvi6+-3'contains in addition to the Rvi6 resistance gene also a partial resistance that works against apple scab. All varieties were treated with either Luna Care ® (Fluopyram and Fosetyl-Al), Aliette® (Fosetyl-Al), or water for the untreated control (UTC). Treatments took place between growth stages BBCH 69 and 71, and for each treatment, at least four trees per genotype were analyzed.

Scab infection incidence and severity

Classical and abaxial scab infections were separately evaluated by counting the incidence on the overall samples expressed in % and by estimating the percentage of leaf surface infected with lesions ascospore or conidial origin in each tree. From two trees, 10 extension shoots and 10 leaves per shoot were evaluated and % incidence and % severity calculated. Overall, along 3 biological replicates, 300 young leaves and 300 aged leaves leaves were assessed per genotype and per treatment. To test the general effects of treatment, genotype and their interaction, a binomial linear model for incidence and for severity was applied (equation 1). For the severity, the average of the 10 leaves for each shoot was taken as a representative value and a non-parametric Kruskal-Wallis test was executed between the treatments of each genotype. The significance level was set at 0.05 and p-values were adjusted according to the Benjamin-Hochberg method.

$$Scab_{Ascospores+conidia} = \beta_0 + \beta_1 Treatment + \beta_2 Genotype + \beta_3 Treatment * Genotype + \epsilon$$

(equation 1)

All effects (main and interaction) were significant at a significance level ($\alpha$) set at 0.05. Therefore, post hoc tests were performed within a single genotype between treatments using a Duncan's multiple range test with a significance level ($\alpha$) set at 0.05. In sensitive varieties, Aliette® and Luna Care® showed a significant decrease in the incidence of conidia and/or ascospores, Luna Care® performed even better in controlling the severity than Aliette®. Untreated resistant varieties showed a very limited incidence/severity of scab, as expected. Only one scab resistant variety, the partial resistant variety 'PartialRes-5', has an even lower incidence of scab when Aliette® and Luna Care® are applied (see Figure 5). Similar results were obtained with the severity of the percentage of leaf surface infected with conidia and/or ascospores in each tree. Although, we saw also a significant decrease in the severity for 'Rvi6-2' when Aliette® and Luna Care® were

applied (see Figure 6).

The scab incidence and severity results of untreated controls of the sensitive varieties indicate that scab is abundantly present in the experiment. Aliette® and, even more Luna Care® are able to reduce the incidence and severity of scab in sensitive varieties. In the partial resistant variety 'PartialRes-5', a significant decrease in the incidence and severity of scab was observed with the two treatments compared to the untreated control. Also, in 'Rvi6-2' we see a significant decrease in the severity when treated with plant defence enhancers. Finally, we see a clear decrease in the incidence and severity of scab in untreated partial resistant and resistant varieties; the resistance genes are capable of reducing scab incidence.

Reduction of fitness costs

We evaluated the impact of compositions comprising Fosetyl-Al alone or in combiniation with Fluopyram on overall plant fitness by measuring the degree of leaf chlorosisPer two trees of each genotype, 10 shoots and 10 leaves per shoot were evaluated.

The evaluation was subdivided into incidence and severity. For incidence, each leaf was taken as a repetition, and for severity, the average of the 10 leaves for each shoot was taken as a representative value. To test the general effects of treatment, genotype, and their interaction, a (binomial) linear model was used for incidence and severity (similar to equation 1). For severity, the square root of the chlorosis percentage was taken to normalise the data.

All effects were significant at a significance level of 0.05 for incidence and severity. Treatment with Luna Care® showed a significant decrease in chlorosis incidence compared to the untreated control (see Figure 8) in 4 of the 8 genotypes. These four genotypes belong to different classes of resistance, and therefore the decrease cannot be linked to a certain resistance class. Treatment with Aliette® on the other hand, resulted in a significant decrease in chlorosis incidence in 7 of the 8 genotypes; only the decrease in chlorosis incidence was not significant in 'Rvi6-1' based on Duncan's multiple range test. The severity of chlorosis is more consistent between the different varieties (see Figure 9): Treatment with Luna Care® resulted in 6 of the 8 genotypes in a significant decreasein the severity of chlorosis, and treatment with Aliette® resulted in a significant decrease in all genotypes at the same significance level (0.05).

Taking into account that Luna Care® contains less Fosetyl-Aluminium than Aliette®, we see a clear decrease in the incidence and severity of leaf chlorosis with increasing dose of Fosetyl-Aluminium, regardless of genotype.

Delay in senescence

We evaluated the impact of compositions comprising Fosetyl-Al alone or in combiniation with Fluopyram on on the delay of leaf senescence. The fall of leaves was evaluated on 7th and 18th of November counting the number of green leaves in each tree and the results indicate that senescence started later for the treated trees than for the untreated control, hence the treatments caused a delay in senescence.

Trees treated with Fosetyl-Al (Aliette®) alone and in combination with Fluopyram (Luna Care®) had significantly more green leaves on November 7$^{th}$ and 18th of November, indicating that the treatments caused a delay in senescence (see Figure 10). This was observed in all genotypes.

Control of mosaic scab in resistant varieties and priming effects

To assess the control of mosaic scab by Aliette® and Luna Care® in genotypes with different resistant sources, mosaic scab was evaluated on 20th September. The older leaves from leaf 1 to 9 from the assessment were used to evaluate the additional control of Luna Care® and Aliette® on mosaic scab. Younger leaves from leaf 10 to leaf 20 were used to evaluate the priming effects of the treatments. These leaves are newly developed and not present at the latest application date This separation was based on the extrapolation of the phenology from a 12-year-old Jonagold orchard in Orsmaal.

A linear model similar to equation 1 was used to test the general effects of treatment, genotype, and interaction on the incidence of mosaic scab and the priming effect of the treatments. The main effects and interactions were significant for both traits, so post hoc tests were performed separately for each genotype using a Duncan's multiple range test with a significance level ($\alpha$) set at 0.05. For the severity, the average of the 10 leaves for each shoot was taken as a representative value and a non-parametric Kruskal-Wallis test was executed between the treatments of each genotype. The significance level was set at 0.05 and p-values were adjusted according to the Benjamin-Hochberg method.

Aliette® and Luna Care® significantly decrease (with $\alpha$= 0.05) the incidence and severity of mosaic scab for those genotypes that show enough mosaic scab when left untreated (see Figures 11 and 12). For genotypes such as 'PartialRes-4', 'Rvi6-1' and 'Rvi6+-3', there is no significant decrease in either the incidence and severity of mosaic scab, likely due to the very low incidence of mosaic scab in these genotypes.

The priming effects show similar results with a decrease of the plant defence enhancer treated trees in most

varieties (see Figure 13 and 14), only in varieties 'PartialRes-4' and 'Rvi6+-3' no significant decrease could be observed in the plant defence enhancer treated trees compared to the untreated control trees.

Aliette® and Luna Care® significantly decrease (with $\alpha$= 0.05) the incidence and severity of abaxial mosaic scab for those genotypes that show enough mosaic scab when left untreated. These results indicate that the application of Aliette® and Luna Care® could be beneficial in reducing the chance of resistance break-through. Priming effects show similar results, only varieties show 'PartialRes-4' and 'Rvi6+-3' no significant decrease in mosaic scab when treated with the plant defence enhancers, possibly because these varieties have the strongest genetic scab resistance/tolerance.

**Figure Legends**

*Figure 1: Incidence of chlorosis (frequency) for the three treatments Untreated control UTC, Luna Care (FLU&FEA) and Aliette FEA and the eight varieties representing different resistant genotypes. Letters above the bar plots indicate whether the treatments within a variety are significantly different from each other based on a Duncan's multiple range test with a significance level ($\alpha$) set at 0.05.*

*Figure 2: Average number of green leaves on (A) 7 and (B) 18 November and (C) the speed of leaf fall between both time points with standard error for the three treatments. Letters above the bar plots indicate whether the treatments within a genotype are significantly different from each other based on a Duncan's multiple range test with a significance level ($\alpha$) set at 0.05.*

*Figure 3: % incidence of classical scab and abaxial mosaic scab infection (Y axis) under natural pressure in July 2021 on various scab resistant varieties and on the scab susceptible Golden delicious cultivar and Bayer 7 selection versus the additional control induced by the PDE combination Fluopyram and Fosetyl-Al. For each comparison on the left side the variety with additional control, induced by the fungicide/PDE compound versus on the right side, the performance of the selection solo without PDE. In addition, the leaf distortion evaluated by a logarithmic rating scale RTG (rating) 1-9 (also Yaxis), with 1 no occurrence and 9 severe occurrence is expressed by the green bars. Blue arrows highlight the contrast between plants treated with vs. without PDE (Fosetyl-Al).*

*Figure 4: Remaining leaf density in percent (green bars) in the top, middle (mid) and lower (low) part of the tree canopy and percentage of leaf drop (yellow bar) in October on various scab-resistant varieties and zwo susceptible varieties (Golden delicious and Bayer 7). Leaf drop values are given for each variety with and without PDE treatment.*

*Figure 5: Severity of scab* (% *leaf surface coverage with ascospore / conidial lesions) for the three treatments and the eight varieties with standard errors. Letters above the bar plots indicate whether the treatments within a variety are significantly different from each other based on the non-parametric Kruskal-Wallis test with significance level ($\alpha$) set at 0.05 and with p-values adjusted according to the Benjamin-Hochberg method.*

*Figure 6: Incidence of scab (frequency of ascospores and/or conidia) for the three treatments and the eight varieties. Letters above the bar plots indicate whether the treatments within a variety are significantly different from each other based on a Duncan's multiple range test with a significance level ($\alpha$) set at 0. 05.*

*Figure 7: Images of chlorosis on the 14th of July*

*Figure 8: Incidence of chlorosis (frequency) for the three treatments and the eight varieties. Letters above the bar plots indicate whether the treatments within a variety are significantly different from each other based on a Duncan's multiple range test with a significance level ($\alpha$) set at 0.05.*

*Figure 9: Average chlorosis severity (percent of leaf surface with chlorosis) with standard error for the three treatments and the eight varieties. Letters above the bar plots indicate whether the treatments within a variety are significantly different from each other based on a Duncan's multiple range test with a significance level ($\alpha$) set at 0.05.*

*Figure 10: Average number of green leaves on (A) 7 and (B) 18 November and (C) the speed of leaf fall between both time points with standard error for the three treatments. Letters above the bar plots indicate whether the treatments within a genotype are significantly different from each other based on a Duncan's multiple range test with a significance level ($\alpha$) set at 0.05.*

*Figure 11: Incidence of mosaic scab (frequency) on the old leaves (1 to 9) for the three treatments and the eight varieties. Letters above the bar plots indicate whether the treatments within a variety are significantly different from each other based on a Duncan 's multiple range test with a significance level ($\alpha$) set at 0.05.*

*Figure 12: Severity of mosaic scab on the old leaves (1 to 9) for the three treatments and the eight varieties with standard error. Letters above the bar plots indicate whether the treatments within a variety are significantly different from each other based on the non-parametric Kruskal-Wallis test with significance level ($\alpha$) set at 0.05 and with p-values adjusted according to the Benjamin-Hochberg method.*

*Figure 13: Incidence of mosaic scab (frequency) on the young leaves (10 to 20) for the three treatments and the eight varieties. Letters above the bar plots indicate whether the treatments within a variety are significantly different from each other based on a Duncan 's multiple range test with a significance level ($\alpha$) set at 0. 05.*

*Figure 14: Severity of mosaic scab on the newly developed young leaves (10 to 20) for the three treatments and the eight varieties with standard error. Letters above the bar plots indicate whether the treatments within a variety are significantly different from each other based on the non-parametric Kruskal-Wallis test with significance level ($\alpha$) set at 0. 05 and with p-values adjusted according to the Benjamin-Hochberg method.*

## Claims

**1.** Use of a composition comprising a plant defense enhancer selected from the group of phosphonates for reducing the fitness costs in apple plants associated with the defense response of the apple plants against infections with *Venturia inaequalis.*

**2.** Use according to claim 1, wherein the plant defense enhancer is Fosetyl-Aluminium.

**3.** Use according to claim 1 or 2, wherein the composition comprising a plant defense enhancer is used in combination with a composition comprising a fungicide selected from the group of succinate dehydrogenase inhibitors.

**4.** Use according to claim 1 or 2, wherein the composition comprises in addition to the plant defense enhancer a fungicide selected from the group of succinate dehydrogenase inhibitors.

**5.** Use according to claim 3 or 4, wherein the succinate dehydrogenase inhibitor is Fluopyram.

**6.** Use according to any of claims 1 to 5, wherein the composition is applied between BBCH 69 and BBCH 71.

**7.** Use according to any of claims 1 to 5, wherein the composition is applied at BBCH 71.

**8.** Use according to any of claims 1 to 5, wherein the composition is applied at BBCH 69 plus two weeks.

**9.** Use according to any of claims 1 to 8, wherein the composition is applied by spraying.

**10.** Use according to any of claims 1 to 9, wherein the composition is applied at an application rate between 0.1 and 1.5 kg/ha/mCH of total active ingredient.

**11.** Use of a composition according to any of claims 1 to 10, **characterized in that** the use results in a delay of leaf senescence in the treated apple plants.

Figure 1

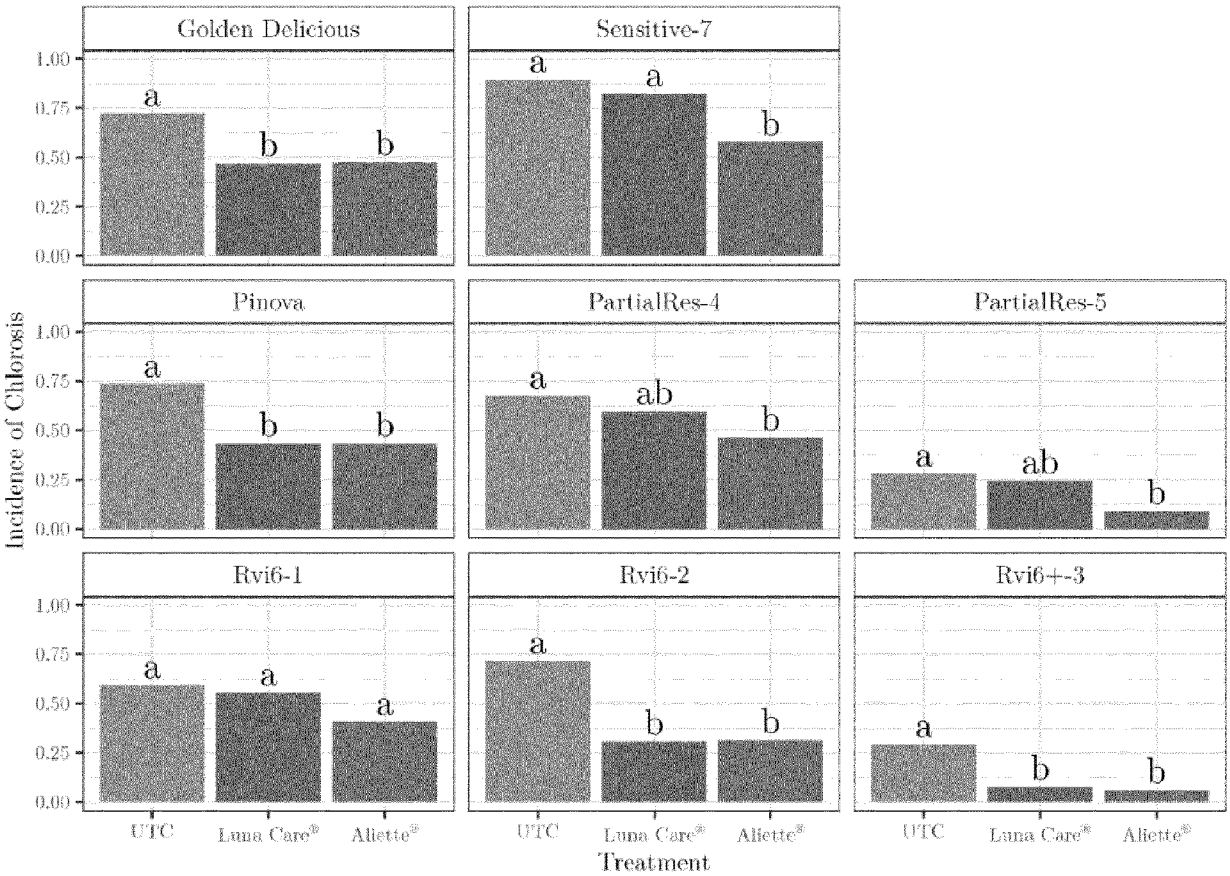
Golden Delicious
Sensitive-7
Pinova
PartialRes-4
PartialRes-5
Rvi6-1
Rvi6-2
Rvi6+-3
Incidence of Chlorosis
1.00
0.75
0.50
0.25
0.00
a
b
ab
UTC
Luna Care®
Aliette®
Treatment

Figure 2

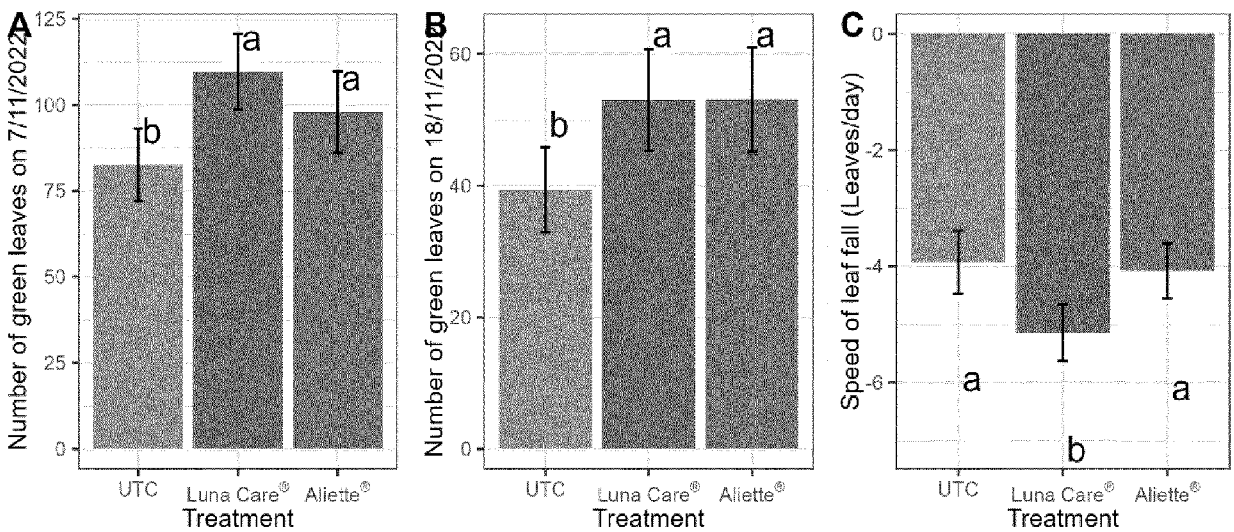
A
B
C
Number of green leaves on 7/11/2022
Number of green leaves on 18/11/2022
Speed of leaf fall (Leaves/day)
UTC
Luna Care®
Aliette®
Treatment
a
b

**Figure 3**

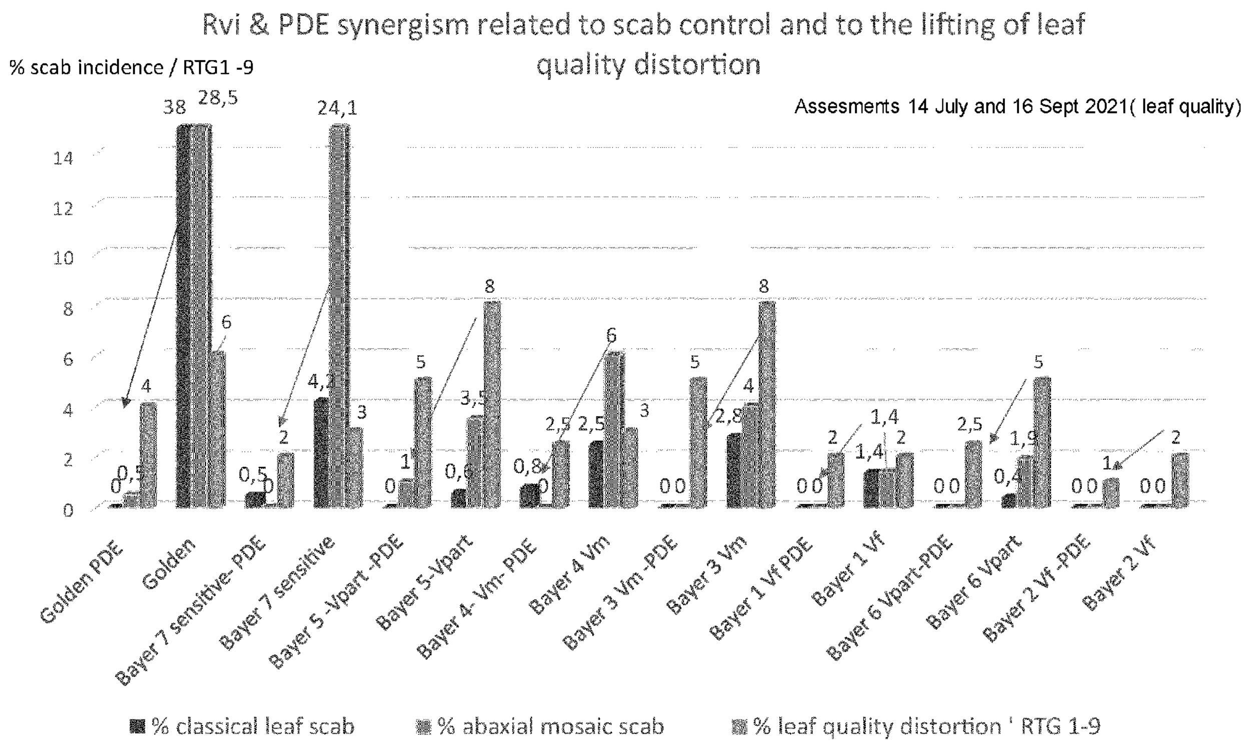
Rvi & PDE synergism related to scab control and to the lifting of leaf quality distortion
% scab incidence / RTG1 -9
Assesments 14 July and 16 Sept 2021( leaf quality)
Golden PDE
Golden
Bayer 7 sensitive- PDE
Bayer 7 sensitive
Bayer 5 -Vpart -PDE
Bayer 5-Vpart
Bayer 4- Vm- PDE
Bayer 4 Vm
Bayer 3 Vm -PDE
Bayer 3 Vm
Bayer 1 Vf PDE
Bayer 1 Vf
Bayer 6 Vpart-PDE
Bayer 6 Vpart
Bayer 2 Vf -PDE
Bayer 2 Vf
% classical leaf scab
% abaxial mosaic scab
% leaf quality distortion ' RTG 1-9

Figure 4

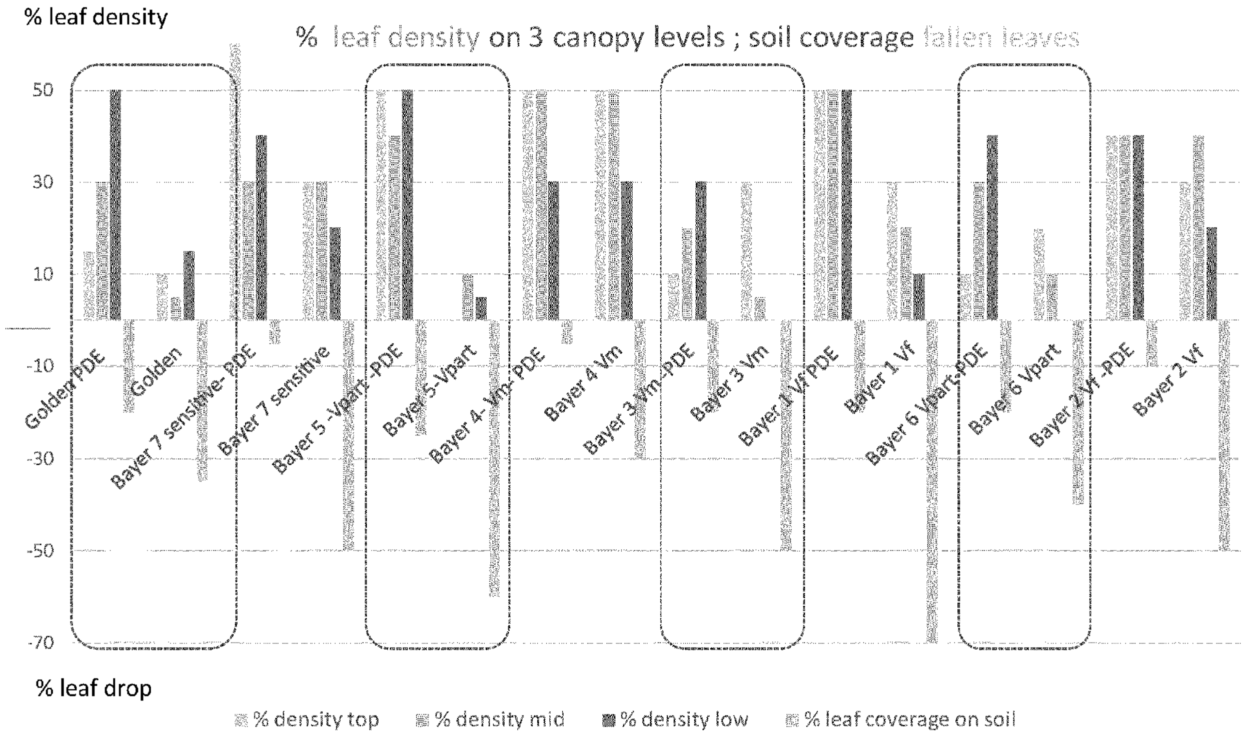
% leaf density
% leaf density on 3 canopy levels ; soil coverage fallen leaves
50
30
10
-10
-30
-50
-70
Golden PDE
Golden
Bayer 7 sensitive- PDE
Bayer 7 sensitive
Bayer 5 -Vpart -PDE
Bayer 5-Vpart
Bayer 4- Vm- PDE
Bayer 4 Vm
Bayer 3 Vm-PDE
Bayer 3 Vm
Bayer 1 Vf PDE
Bayer 1 Vf
Bayer 6 Vpart-PDE
Bayer 6 Vpart
Bayer 2 Vf -PDE
Bayer 2 Vf
% leaf drop
% density top
% density mid
% density low
% leaf coverage on soil

Figure 5

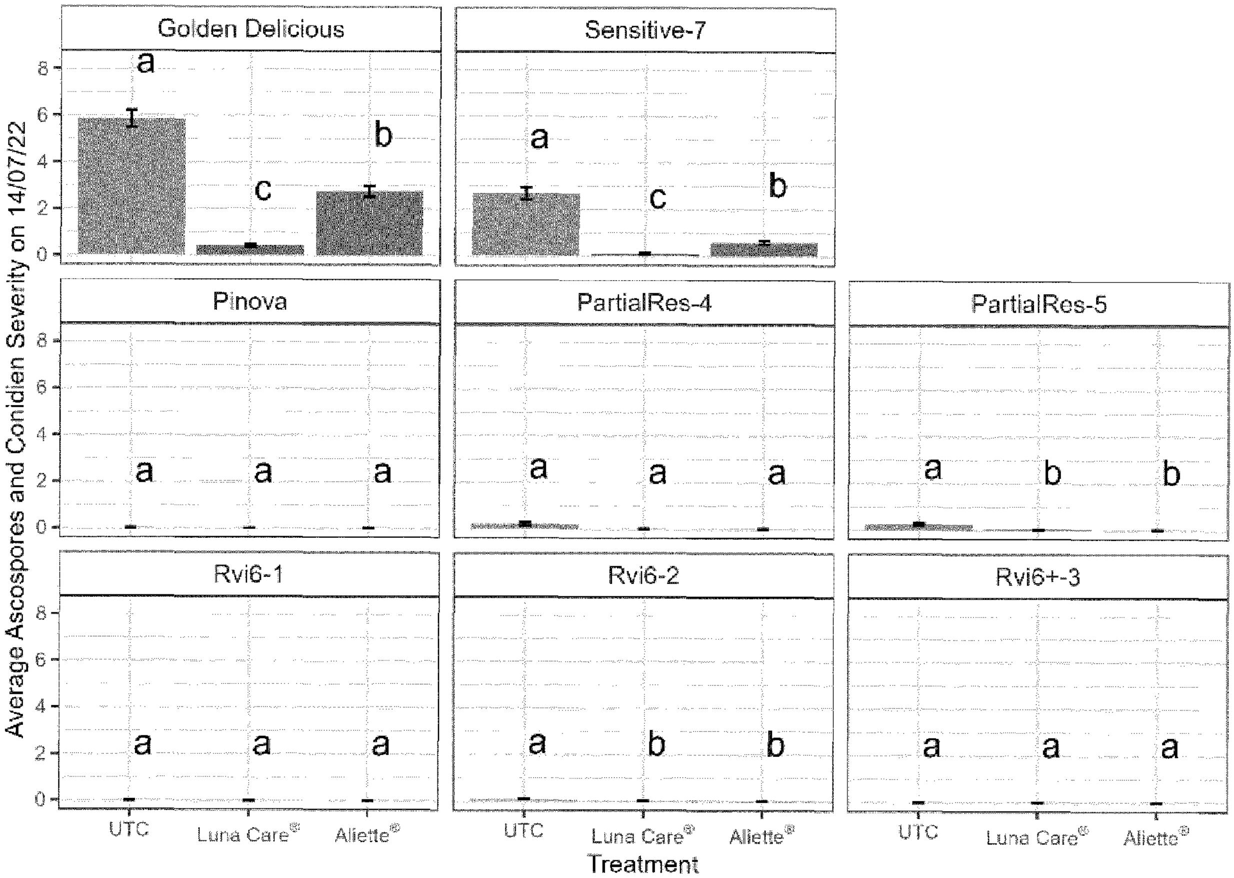
Golden Delicious
Sensitive-7
Pinova
PartialRes-4
PartialRes-5
Rvi6-1
Rvi6-2
Rvi6+-3
Average Ascospores and Conidien Severity on 14/07/22
Treatment
UTC
Luna Care®
Aliette®
0
2
4
6
8
a
b
c

Figure 6

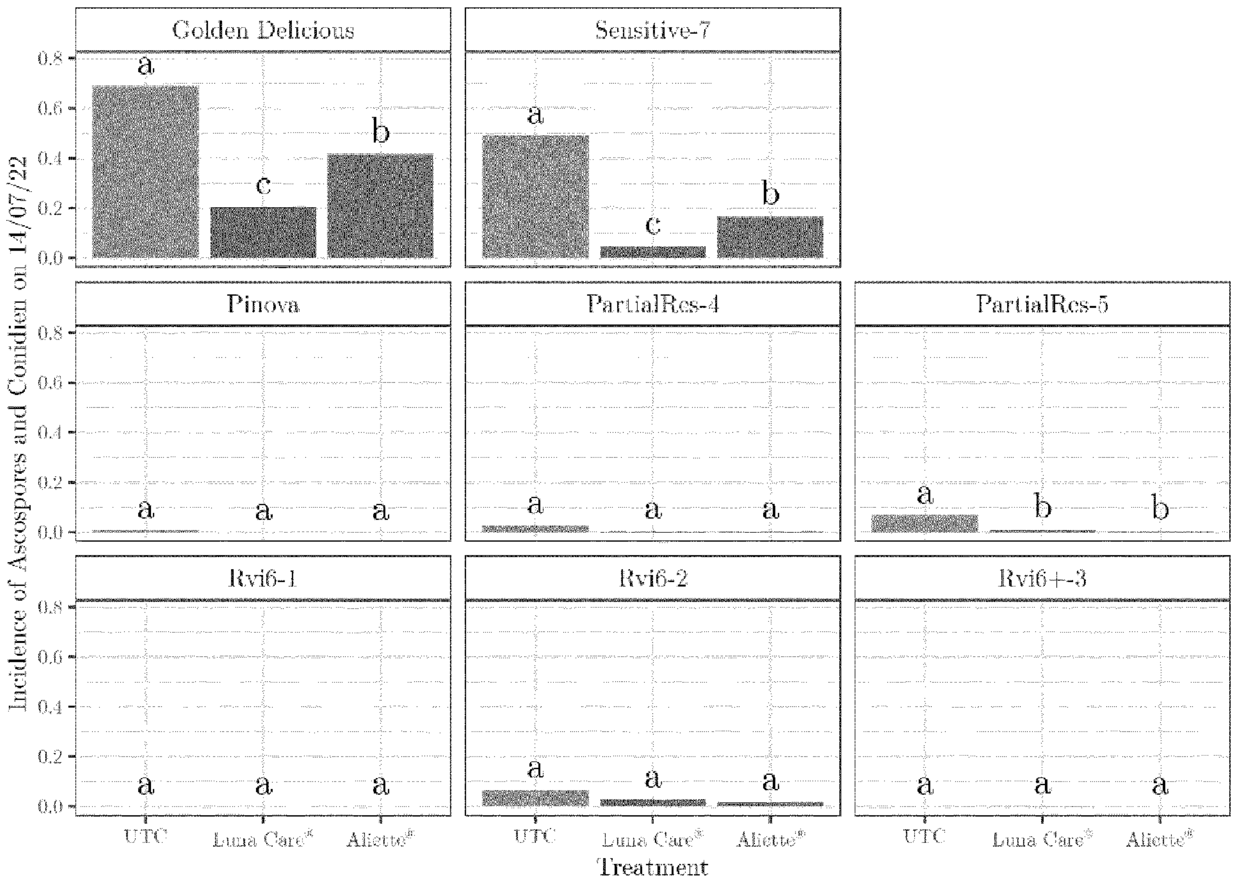
Golden Delicious
Sensitive-7
Pinova
PartialRes-4
PartialRes-5
Rvi6-1
Rvi6-2
Rvi6+-3
Incidence of Ascospores and Conidien on 14/07/22
0.0
0.2
0.4
0.6
0.8
a
b
c
UTC
Luna Care®
Aliette®
Treatment

Figure 7

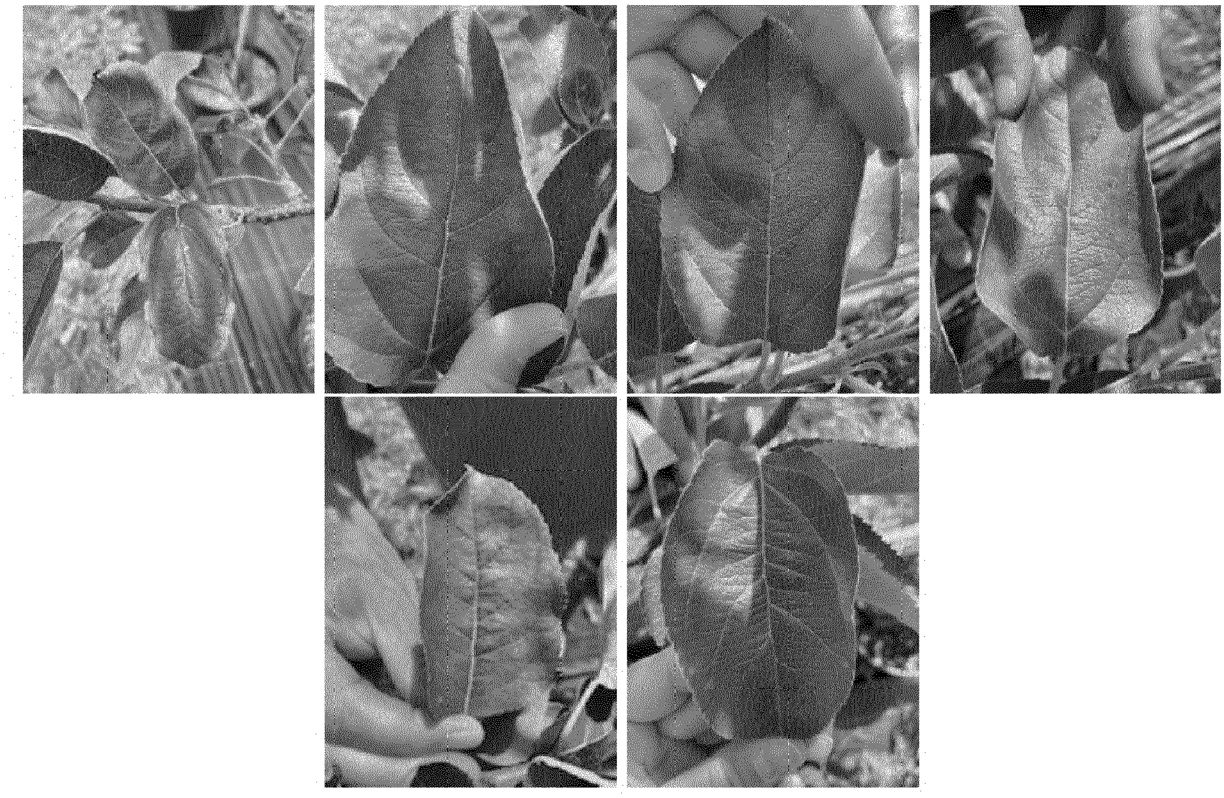

Figure 8

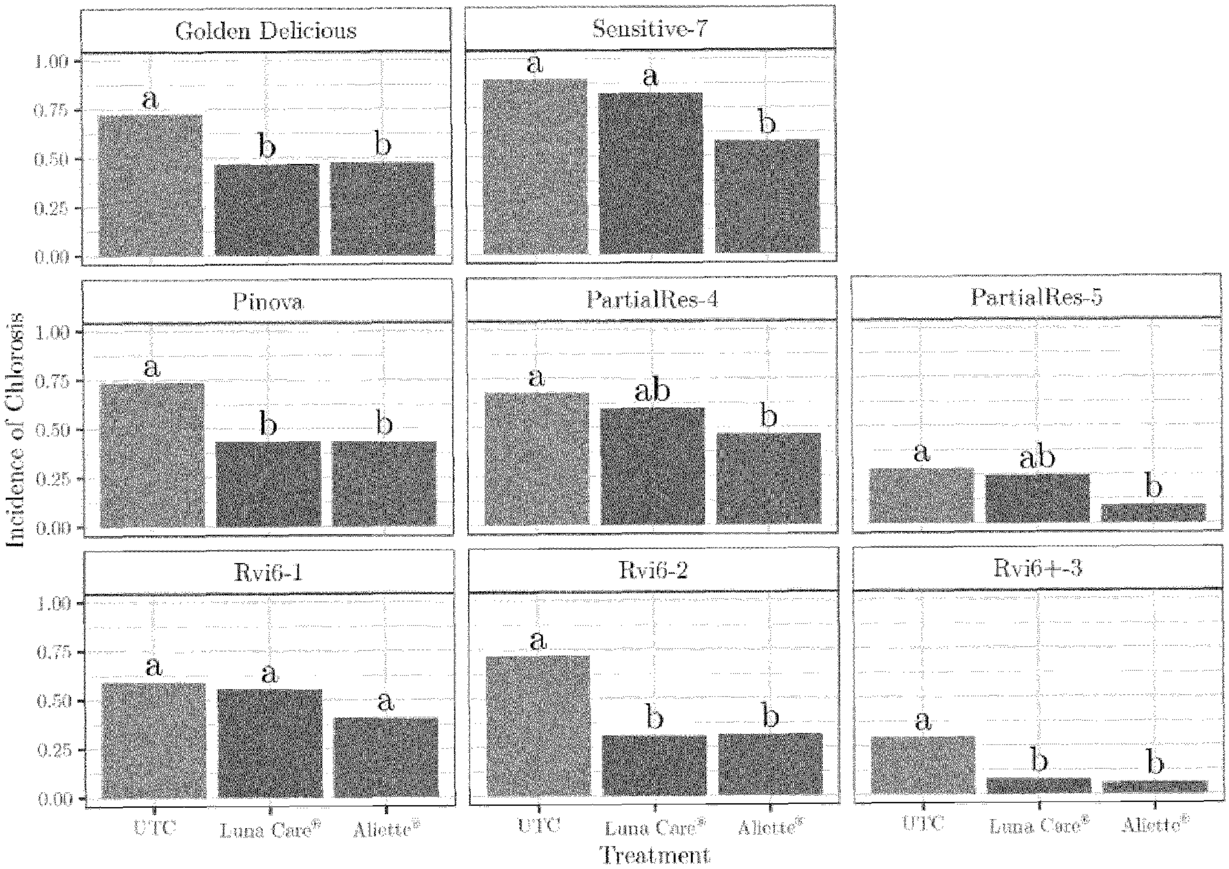
Golden Delicious
Sensitive-7
Pinova
PartialRes-4
PartialRes-5
Rvi6-1
Rvi6-2
Rvi6+-3
Incidence of Chlorosis
1.00
0.75
0.50
0.25
0.00
a
b
ab
UTC
Luna Care®
Aliette®
Treatment

**Figure 9**

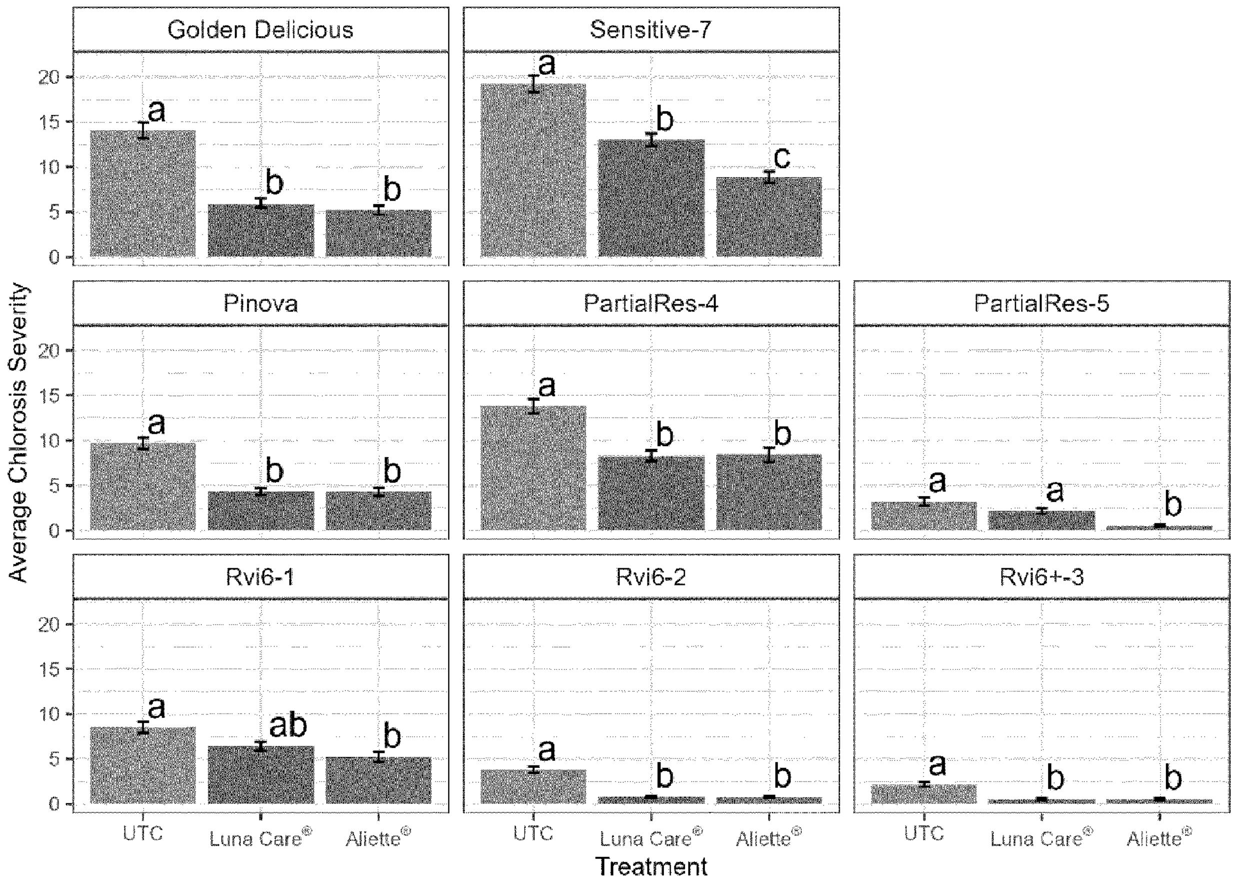
Golden Delicious
Sensitive-7
Pinova
PartialRes-4
PartialRes-5
Rvi6-1
Rvi6-2
Rvi6+-3
Average Chlorosis Severity
0
5
10
15
20
a
b
c
ab
UTC
Luna Care®
Aliette®
Treatment

Figure 10

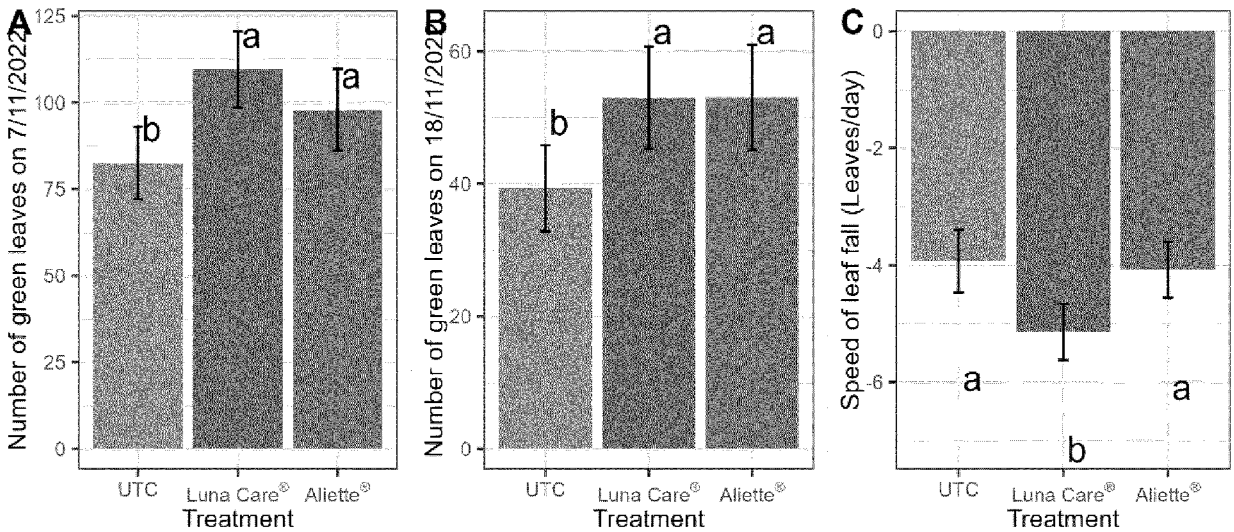
A
Number of green leaves on 7/11/2022
125
100
75
50
25
0
b
a
a
UTC
Luna Care®
Aliette®
Treatment
B
Number of green leaves on 18/11/2022
60
40
20
0
b
a
a
UTC
Luna Care®
Aliette®
Treatment
C
Speed of leaf fall (Leaves/day)
0
-2
-4
-6
a
b
a
UTC
Luna Care®
Aliette®
Treatment

Figure 11

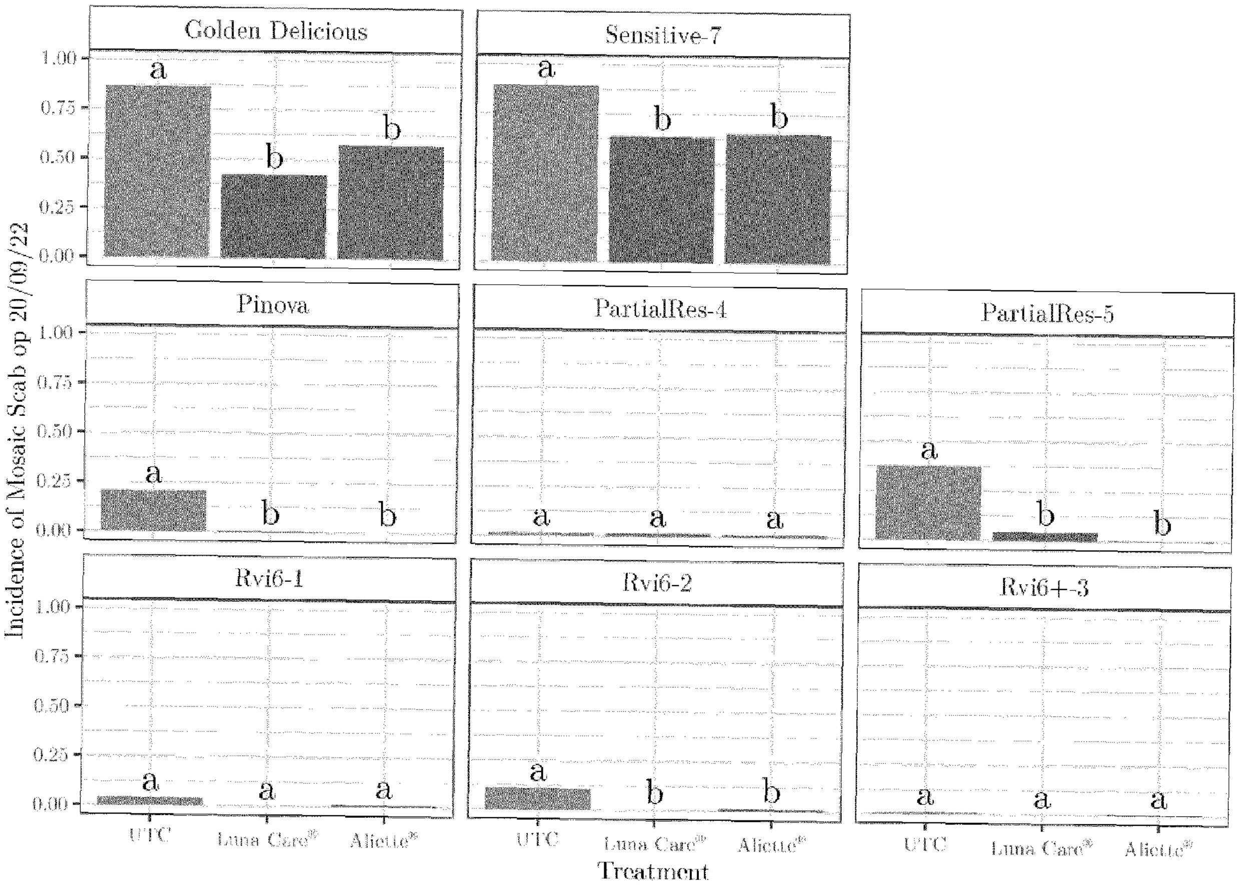
Golden Delicious
Sensitive-7
Pinova
PartialRes-4
PartialRes-5
Rvi6-1
Rvi6-2
Rvi6+-3
Incidence of Mosaic Scab op 20/09/22
1.00
0.75
0.50
0.25
0.00
a
b
UTC
Luna Care®
Aliette®
Treatment

**Figure 12**

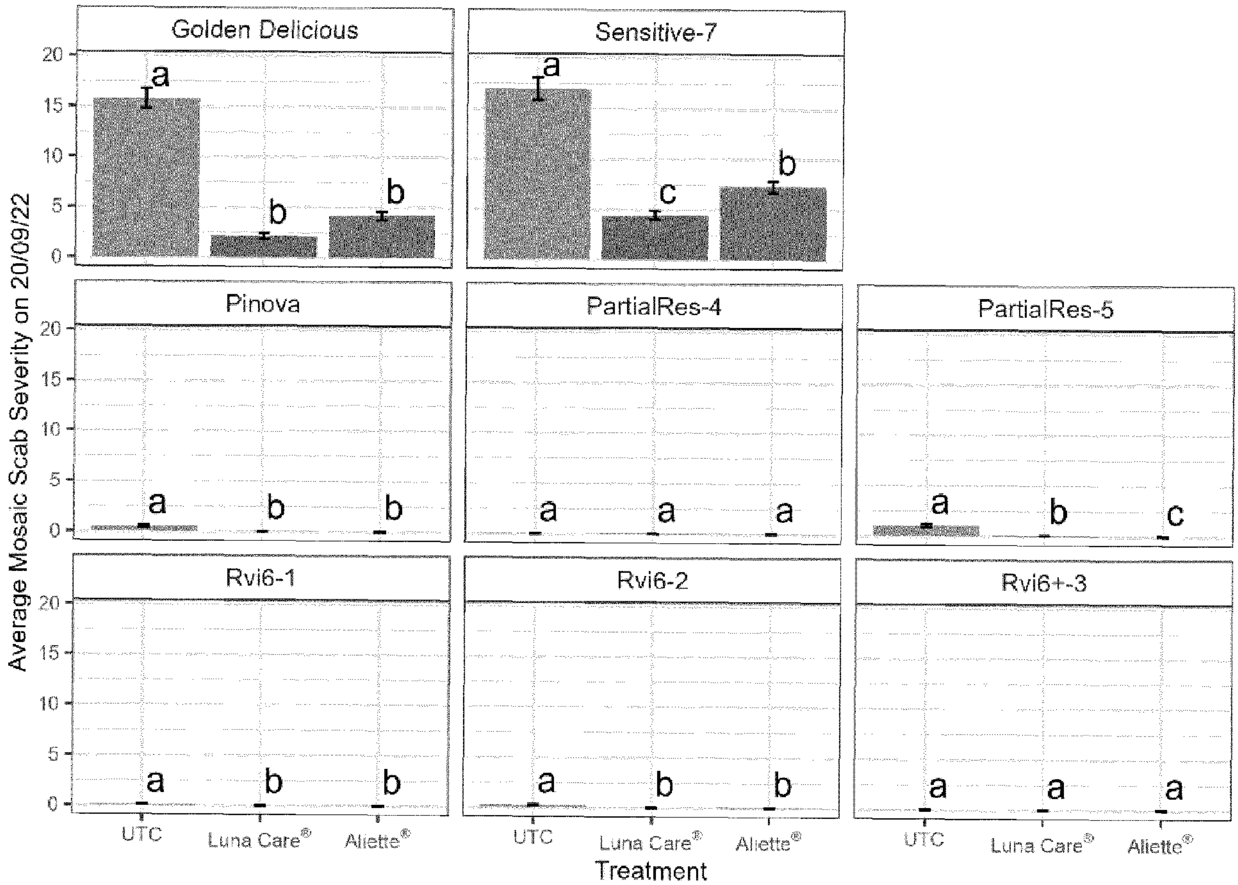
Golden Delicious
Sensitive-7
Pinova
PartialRes-4
PartialRes-5
Rvi6-1
Rvi6-2
Rvi6+-3
Average Mosaic Scab Severity on 20/09/22
20
15
10
5
0
a
b
c
UTC
Luna Care®
Aliette®
Treatment

**Figure 13**

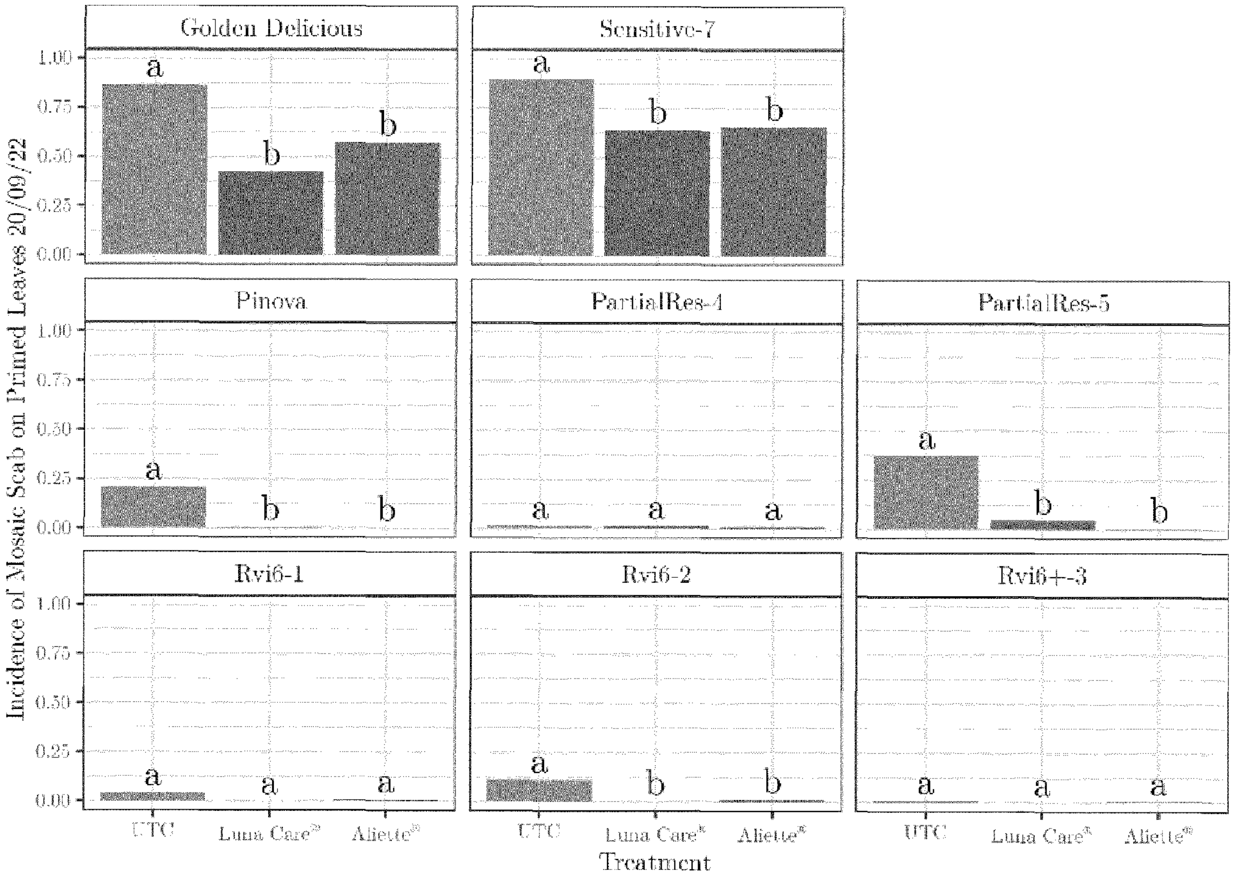
Golden Delicious
Sensitive-7
Pinova
PartialRes-4
PartialRes-5
Rvi6-1
Rvi6-2
Rvi6+-3
Incidence of Mosaic Scab on Primed Leaves 20/09/22
1.00
0.75
0.50
0.25
0.00
a
b
UTC
Luna Care®
Aliette®
Treatment

Figure 14

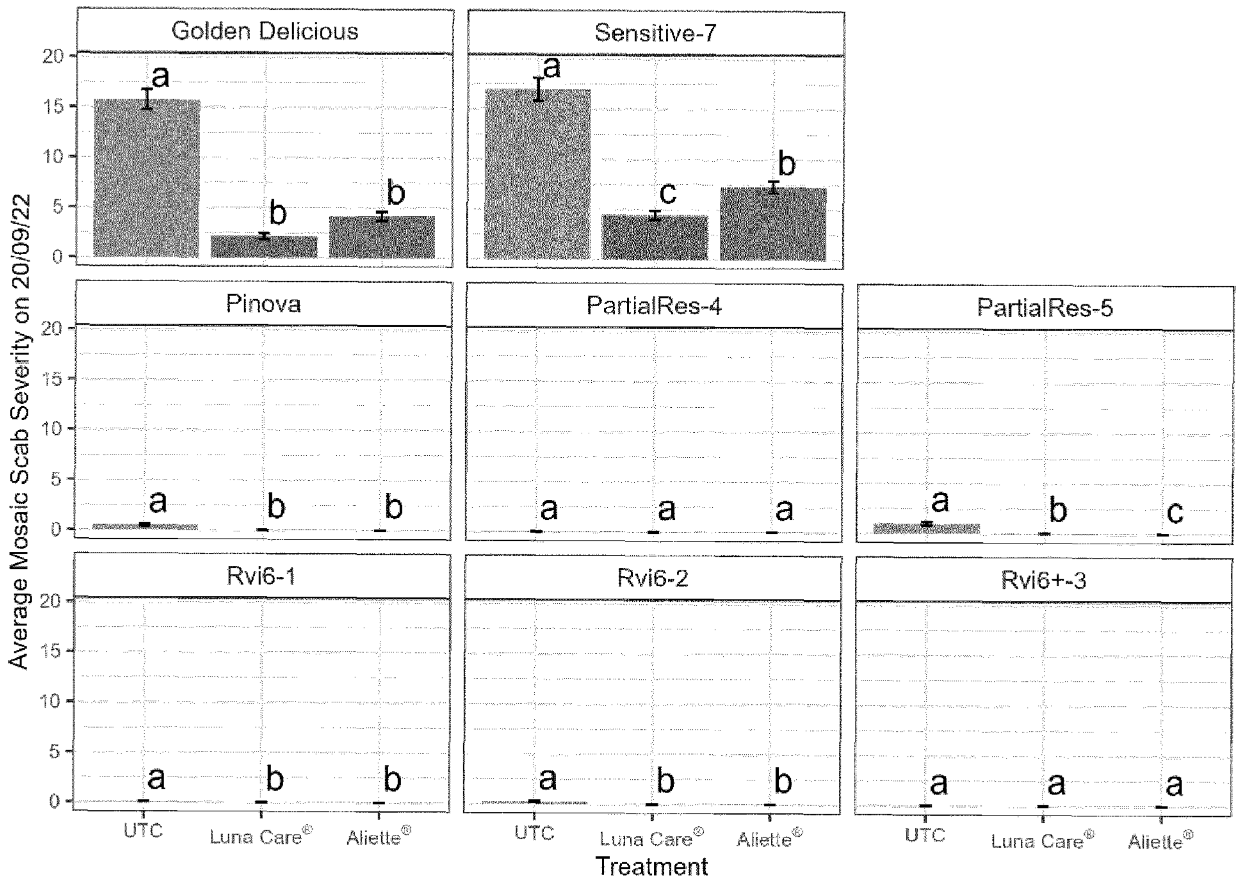
Golden Delicious
Sensitive-7
Pinova
PartialRes-4
PartialRes-5
Rvi6-1
Rvi6-2
Rvi6+-3
Average Mosaic Scab Severity on 20/09/22
Treatment
UTC
Luna Care®
Aliette®
0
5
10
15
20
a
b
c

Europäisches Patentamt
European Patent Office
Office européen des brevets

# EUROPEAN SEARCH REPORT

Application Number
EP 24 16 3380

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2019/121525 A1 (BAYER AG [DE]) 27 June 2019 (2019-06-27) * page 42, line 2 - line 4 * * page 42, line 20 * * page 42, line 19 * * page 42, line 25 * * page 42, line 27 * * page 25, line 32 - line 33 * * page 42, line 28 - line 29 * ----- | 1-11 | INV. A01N57/12 A01N43/40 A01P3/00 A01P5/00 |
| A | WO 2005/077181 A1 (BAYER CROPSCIENCE SA [FR]; GROSJEAN-COURNOYER MARIE-CLAIR [FR] ET AL.) 25 August 2005 (2005-08-25) * page 30, line 19 - line 20 * * page 31, line 15 * * page 10, line 15 * * page 12, line 9 * ----- | 1-5 | |
| A,D | CN 102 726 399 A (SHAANXI MEIBANG PESTICIDES CO) 17 October 2012 (2012-10-17) * claim 1 * * table 22 * ----- | 1-5 | TECHNICAL FIELDS SEARCHED (IPC) |
| A | WO 2019/002151 A1 (SYNGENTA PARTICIPATIONS AG [CH]) 3 January 2019 (2019-01-03) * page 110, line 26 * * page 111, line 8 * * page 27, line 38 * * page 29, line 32 * * page 57, line 2 - line 4 * * page 57, line 12 - line 15 * ----- | 1-5 | A01N A01P |

The present search report has been drawn up for all claims

3

| Place of search | Date of completion of the search | Examiner |
|---|---|---|
| Munich | 21 August 2024 | Antoni, Frauke |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 16 3380

This annex lists the patent family members relating to the patent documents cited in the above-mentioned European search report. The members are as contained in the European Patent Office EDP file on
The European Patent Office is in no way liable for these particulars which are merely given for the purpose of information.

21-08-2024

| Patent document cited in search report | Publication date | Patent family member(s) | Publication date |
|---|---|---|---|
| WO 2019121525 A1 | 27-06-2019 | BR 112020012487 A2 | 24-11-2020 |
| | | CN 111741680 A | 02-10-2020 |
| | | EP 3726989 A1 | 28-10-2020 |
| | | JP 7361696 B2 | 16-10-2023 |
| | | JP 2021506888 A | 22-02-2021 |
| | | KR 20200100768 A | 26-08-2020 |
| | | UA 127788 C2 | 03-01-2024 |
| | | US 2020329712 A1 | 22-10-2020 |
| | | WO 2019121525 A1 | 27-06-2019 |
| WO 2005077181 A1 | 25-08-2005 | AT E401791 T1 | 15-08-2008 |
| | | AU 2005213184 A1 | 25-08-2005 |
| | | BE 2020C513 I2 | 08-08-2024 |
| | | BR PI0506613 A | 02-05-2007 |
| | | CA 2551147 A1 | 25-08-2005 |
| | | CN 1917762 A | 21-02-2007 |
| | | DK 1713334 T3 | 17-11-2008 |
| | | EC SP066840 A | 26-01-2007 |
| | | EP 1570738 A1 | 07-09-2005 |
| | | EP 1713334 A1 | 25-10-2006 |
| | | ES 2311213 T3 | 01-02-2009 |
| | | FR 19C1016 I1 | 19-04-2019 |
| | | HU S2000010 I1 | 28-07-2020 |
| | | JP 4711975 B2 | 29-06-2011 |
| | | JP 2007522185 A | 09-08-2007 |
| | | NZ 548021 A | 30-09-2010 |
| | | PL 1713334 T3 | 30-01-2009 |
| | | PT 1713334 E | 18-09-2008 |
| | | RU 2369095 C2 | 10-10-2009 |
| | | SI 1713334 T1 | 31-10-2008 |
| | | UA 85402 C2 | 26-01-2009 |
| | | US 2007142444 A1 | 21-06-2007 |
| | | WO 2005077181 A1 | 25-08-2005 |
| CN 102726399 A | 17-10-2012 | NONE | |
| WO 2019002151 A1 | 03-01-2019 | AR 112211 A1 | 02-10-2019 |
| | | BR 112019027900 A2 | 21-07-2020 |
| | | CA 3067309 A1 | 03-01-2019 |
| | | CL 2019003859 A1 | 12-06-2020 |
| | | CN 110799035 A | 14-02-2020 |
| | | CO 2019014948 A2 | 17-01-2020 |
| | | EP 3644743 A1 | 06-05-2020 |
| | | IL 271604 A | 27-02-2020 |
| | | JP 7171634 B2 | 15-11-2022 |
| | | JP 2020525501 A | 27-08-2020 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 24 16 3380

This annex lists the patent family members relating to the patent documents cited in the above-mentioned European search report. The members are as contained in the European Patent Office EDP file on
The European Patent Office is in no way liable for these particulars which are merely given for the purpose of information.

21-08-2024

| Patent document cited in search report | Publication date | Patent family member(s) | Publication date |
|---|---|---|---|
| | | KR 20200022452 A | 03-03-2020 |
| | | US 2020315176 A1 | 08-10-2020 |
| | | UY 37783 A | 31-01-2019 |
| | | WO 2019002151 A1 | 03-01-2019 |
| | | ZA 201908224 B | 28-10-2020 |

EPO FORM P0459

For more details about this annex : see Official Journal of the European Patent Office, No. 12/82

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*

### Patent documents cited in the description


- DE 2456627
- WO 2004016088 A
- EP 1713334 A
- EP 3726989 A


### Non-patent literature cited in the description


- **BOWEN J et al.** Venturia inaequalis: the causal agent of apple scab.. *Molecular Plant Pathology*, 2011, vol. 12, 105-122
- **SVARA A. et al.** Ontogeny-dependent development of diffuse abaxial scab symptoms on apple leaves.. *Phytopathology*, February 2024
- **LOZANO-DURAN R et al.** Trade-off between growth and immunity: role of brassinosteroids.. *Trends of Plant Sci*, January 2015, vol. 20 (1), 12-9
- **MARTINEZ-MEDINA A. et al.** Recognizing plant defense priming.. *Trends in Plant Science*, October 2016, vol. 21 (10)
- **CONRATH U**. *Plant Microbe Interact.*, vol. 19, 1062-1071
- **LATORSE, M-P. et al.** Comparison of the transcriptomic biomarker signatures in vine and Arabidopsis thaliana attacked by Downy mildews with or without Fosetyl-Al, stimulator of plant defenses pre-treatment.. *Natural products and Biocontrol Perpignan*, 2012, 19-21
- **PETRÉ, R**. *Acta Hort. (ISHS)*, 2015, vol. 1094, 431-438
- *CHEMICAL ABSTRACTS*, 39148-24-8
- Biologische Bundesanstalt für Land- und Forstwirtschaft, Bundessortenamt und Chemische Industrie. German Federal Biological Research Centre for Agriculture and Forestry, 2001
- *CHEMICAL ABSTRACTS*, 183675-82-3
- *CHEMICAL ABSTRACTS*, 1228284-64-7
- *CHEMICAL ABSTRACTS*, 1072957-71-1
- *CHEMICAL ABSTRACTS*, 581809-46-3
- *CHEMICAL ABSTRACTS*, 188425-85-6
- *CHEMICAL ABSTRACTS*, 1383809-87-7
- *CHEMICAL ABSTRACTS*, 658066-35-4
- *CHEMICAL ABSTRACTS*, 907204-31-3
- *CHEMICAL ABSTRACTS*, 875915-78-9
- *CHEMICAL ABSTRACTS*, 1255734-28-1
- *CHEMICAL ABSTRACTS*, 881685-58-1